(19) Europäisches Patentamt
European Patent Office
Office européen des brevets

(11) EP 4 783 515 A1

(12) EUROPEAN PATENT APPLICATION

(43) Date of publication:
29.07.2026 Bulletin 2026/31

(21) Application number: 25203785.8

(22) Date of filing: 22.09.2025

(51) International Patent Classification (IPC):
H04L 9/08 (2006.01)     H04L 9/16 (2006.01)

(52) Cooperative Patent Classification (CPC):
H04L 9/0825; G06F 8/36; G06F 21/577;
G06N 10/60; G06N 10/80; H04L 9/0838;
H04L 9/16; G06F 2221/033

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.01.2025 IN 202521005202

(71) Applicant: Tata Consultancy Services Limited
Mumbai, Maharashtra 400 021 (IN)

(72) Inventors:
• ROY, Shubhro Shovan
700156 Kolkata, West Bengal (IN)
• SAHU, Pankaj Kumar
110016 New Delhi, Delhi (IN)
• MONDAL, Sutapa
411057 Pune, Maharashtra (IN)
• GHAROTE, Mangesh Sharad
411057 Pune, Maharashtra (IN)
• ALASINGARA BHATTACHAR, Rajan Mindigal
560066 Bangalore, Karnataka (IN)
• LODHA, Sachin Premsukh
411028 Pune, Maharashtra (IN)

(74) Representative: Goddar, Heinz J.
Boehmert & Boehmert
Anwaltspartnerschaft mbB
Pettenkoferstrasse 22
80336 München (DE)

(54) **SELECTION OF POST-QUANTUM CRYPTOGRAPHY (PQC) SCHEMES AND PQC LIBRARIES FOR CRYPTOGRAPHIC APPLICATIONS OF AN ENTERPRISE**

(57) Recommending an optimal combination of PQC schemes, and the PQC libraries for replacing the classical cryptographic schemes of a cryptographic application is a challenging decision problem. Embodiments herein provide a method for selection of the PQC schemes and the PQC libraries for cryptographic applications. The method first generates one or more candidate PQC libraries, for each of the plurality of cryptographic applications based on a plurality of stringent requirement attributes and a plurality of non-stringent requirement attributes, using a plurality of first compatible PQC libraries, and a plurality of second compatible PQC libraries. Further a schemelibrary pair of the one or more candidate PQC libraries is obtained, for each the plurality of classical cryptographic schemes based on a plurality of performance objective metrics. Then one or more final candidate PQC libraries obtained using the schemelibrary pair which is recommended for the plurality of cryptographic applications of an enterprise.

FIG. 2

**Description**

CROSS-REFERENCE TO RELATED APPLICATIONS AND PRIORITY

The present application claims priority to Indian application no. 202521005202, filed on January 22, 2025.

TECHNICAL FIELD

The disclosure herein generally relates to Post Quantum Cryptography, and, more particularly, to a method and system for selection of Post-Quantum Cryptography (PQC) schemes and PQC libraries for cryptographic applications of an enterprise.

BACKGROUND

Enterprises have several applications. Quantum Computers are a high threat to the confidentiality, privacy and authenticity of these enterprise applications. Quantum computers have the potential to become a real threat to existing security services and solutions of cryptographic applications. Existing quantum algorithms like Shor's algorithm have the potential to crack, public key cryptosystems like Rivest-Shamir-Adleman (RSA), Elliptic Curve Digital Signature Algorithm (ECDSA) which require large integer factorization or elliptic curve-based logarithms. Grover's algorithm can significantly reduce the time complexity to break symmetric cryptographic algorithms for encryption such as Advanced Encryption Standard (AES), Data Encryption Standard (DES), Secure Hash Algorithm (SHA), and Message Authentication Code (MAC). To counter these threats, the application requires migrating to Post-quantum cryptography (PQC) by replacing classical cryptographic schemes with PQC schemes and hybrid schemes like Kyber, Dilithium, Hybrid Quasi-Cyclic (HQC), Fast Fourier Lattice-based Compact Signatures Over NTRU (FALCON), Stateless Practical Hash-based Signature Scheme (SPHINCS), Bit Flipping Key Encapsulation (BIKE), McEliece, N-th degree Truncated Polynomial Ring Encryption (NTRU), and thereof. The hybrid schemes combine the classical cryptographic schemes with the PQC schemes. These PQC/hybrid schemes can be implemented using one or multiple PQC libraries like Library for Quantum-Resistant Cryptographic Algorithms (Liboqs), Open Secure Sockets Layer (OpenSSL), Post-Quantum Cryptography Clean (PQCClean), LibPQCcrypto, Cryptography Algorithms based on Lattices (Crystals), NTRUEncrypt, and thereof. The PQC schemes provide alternatives using hard mathematical problems that cannot be broken by quantum computers. The PQC schemes can be implemented using different PQC libraries. A particular PQC scheme might be supported by multiple PQC libraries. But not all PQC libraries support the exact set of PQC schemes. Performance parameters like runtime, memory varies for same PQC scheme and security level for different PQC libraries. This is due to difference in implementation, code optimization, and resource usage of the PQC schemes. Hence, it is necessary to decide on the right combination of the PQC schemes as well as the best set of PQC libraries for the cryptographic applications.

The classical cryptographic schemes in each application need to be replaced by the PQC schemes by optimal selection of the PQC libraries and the PQC schemes such that the overheads in terms of application runtime, memory usage, communication and computation costs are minimal, the required security criteria is satisfied, and the number of PQC libraries used do not exceed a specified budget, considering all the cryptographic applications of the enterprise. The classical cryptographic schemes in the cryptographic application need to be mapped with the best PQC schemes and the PQC libraries for an efficient recommendation to aid PQC migration. However, replacing the classical cryptographic schemes with the PQC schemes can lead to application overhead in terms of runtime, memory, communication, and computation costs. Also, efficient selection of PQC libraries can help to meet several application requirements during the PQC migration. Since client requiring application PQC migration needs to consider several factors and keep migration overheads within limits, and there are multiple PQC libraries, each supporting several PQC schemes and application security requirements to help in PQC migration, an efficient decision support that helps to optimally selecting the PQC schemes, and the PQC libraries for the cryptographic applications of the enterprise remain challenging.

SUMMARY

Embodiments of the present disclosure present technological improvements as solutions to one or more of the above-mentioned technical problems recognized by the inventors in conventional systems. For example, in one embodiment, a method for selection of Post-Quantum Cryptography (PQC) schemes and PQC libraries for cryptographic applications is provided. The method includes receiving a plurality of cryptographic applications pertaining to an enterprise, a plurality of classical cryptographic schemes associated with each of the plurality of cryptographic applications, a plurality of frequencies of a plurality of cryptographic operations associated with each classical cryptographic scheme of the plurality of classical cryptographic schemes, a plurality of Post Quantum Cryptography (PQC) libraries, a plurality of library feature attributes associated with the plurality of PQC libraries, a plurality of application requirement attributes, a plurality of mappings between the plurality of library feature attributes and the plurality of application requirement attributes, a plurality of application requirement attribute types associated with the plurality of cryptographic applications, a plurality of performance objective metrics associated with the plurality of cryptographic applications, and a plurality of application security requirements associated with the plurality of cryptographic applications. The method further includes classifying the plurality of application requirement attributes of each of the cryptographic applications of the plurality of cryptographic applications into one of (a) a stringent requirement attribute and, (b) a non-stringent requirement attribute, to obtain a plurality of stringent requirement attributes, and a plurality of non-stringent requirement attributes, based on the plurality of application requirement attribute types. The method further includes obtaining (i) a plurality of compatible PQC libraries, and a plurality of non-compatible PQC libraries for each of the plurality of cryptographic applications based on the generated plurality of stringent requirement attributes, (ii) a plurality of first preference based PQC libraries, and a plurality of second preference based PQC libraries for each of the plurality of cryptographic applications based on the plurality of non-stringent requirement attributes and the plurality of library feature attributes, and (iii) a plurality of first compatible PQC libraries, and a plurality of second compatible PQC libraries of the plurality of cryptographic applications based on the plurality of non-stringent requirement attributes. The method further includes obtaining one or more candidate PQC libraries, for each of the plurality of cryptographic applications using the plurality of first compatible PQC libraries, and the plurality of second compatible PQC libraries. The method further includes selecting a plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements. The method further includes obtaining a scheme-library pair comprising a final optimal PQC scheme and a candidate PQC library of the one or more candidate PQC libraries, for each the plurality of classical cryptographic schemes associated with each of the plurality of cryptographic applications. The method further includes obtaining a one or more final candidate PQC libraries of the one or more candidate PQC libraries, using the scheme-library pair for each the plurality of classical cryptographic schemes of the plurality of cryptographic applications. The method further includes recommending the obtained one or more final candidate PQC libraries of the one or more candidate PQC libraries for the plurality of cryptographic applications of the enterprise.

In another aspect, a system for selection of Post-Quantum Cryptography (PQC) schemes and PQC libraries for cryptographic applications is provided. The system (100), comprising: a memory (102) storing instructions; one or more communication interfaces (106); and one or more hardware processors (104) coupled to the memory (102) via the one or more communication interfaces (106), wherein the one or more hardware processors (104) are configured by the instructions to: receive a plurality of cryptographic applications pertaining to an enterprise, a plurality of classical cryptographic schemes associated with each of the plurality of cryptographic applications, a plurality of frequencies of a plurality of cryptographic operations associated with each classical cryptographic scheme of the plurality of classical cryptographic schemes, a plurality of Post Quantum Cryptography (PQC) libraries, a plurality of library feature attributes associated with the plurality of PQC libraries, a plurality of application requirement attributes, a plurality of mappings between the plurality of library feature attributes and the plurality of application requirement attributes, a plurality of application requirement attribute types associated with the plurality of cryptographic applications, a plurality of performance objective metrics associated with the plurality of cryptographic applications, and a plurality of application security requirements associated with the plurality of cryptographic applications; classify the plurality of application requirement attributes of each of the cryptographic application of the plurality of cryptographic applications into one of (a) a stringent requirement attribute and, (b) a non-stringent requirement attribute, to obtain a plurality of stringent requirement attributes, and a plurality of non-stringent requirement attributes, based on the plurality of application requirement attribute types; obtain (i) a plurality of compatible PQC libraries, and a plurality of non-compatible PQC libraries for each of the plurality of cryptographic applications based on the generated plurality of stringent requirement attributes, (ii) a plurality of first preference based PQC libraries, and a plurality of second preference based PQC libraries for each of the plurality of cryptographic applications based on the plurality of non-stringent requirement attributes and the plurality of library feature attributes, and (iii) a plurality of first compatible PQC libraries, and a plurality of second compatible PQC libraries of the plurality of cryptographic applications based on the plurality of non-stringent requirement attributes; obtain one or more candidate PQC libraries, for each of the plurality of cryptographic applications using the plurality of first compatible PQC libraries, and the plurality of second compatible PQC libraries; select a plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements; obtaining a scheme-library pair comprising a final optimal PQC scheme and a candidate PQC library of the one or more candidate PQC libraries, for each the plurality of classical cryptographic schemes associated with each of the plurality of cryptographic applications; obtain a one or more final candidate PQC libraries of the one or more candidate PQC libraries, using the scheme-library pair for each the plurality of classical cryptographic schemes of the plurality of cryptographic applications; recommend the obtained one or more final candidate PQC libraries of the one or more candidate PQC libraries for the plurality of cryptographic applications of the enterprise.

In yet another aspect, there are provided one or more non-transitory machine-readable information storage mediums comprising one or more instructions which when executed by one or more hardware processors cause a method for selection of Post-Quantum Cryptography (PQC) schemes and PQC libraries for cryptographic applications. The method includes receiving a plurality of cryptographic applications pertaining to an enterprise, a plurality of classical cryptographic schemes associated with each of the plurality of cryptographic applications, a plurality of frequencies of a plurality of cryptographic operations associated with each classical cryptographic scheme of the plurality of classical cryptographic schemes, a plurality of Post Quantum Cryptography (PQC) libraries, a plurality of library feature attributes associated with the plurality of PQC libraries, a plurality of application requirement attributes, a plurality of mappings between the plurality of library feature attributes and the plurality of application requirement attributes, a plurality of application requirement attribute types associated with the plurality of cryptographic applications, a plurality of performance objective metrics associated with the plurality of cryptographic applications, and a plurality of application security requirements associated with the plurality of cryptographic applications. The method further includes classifying the plurality of application requirement attributes of each of the cryptographic application of the plurality of cryptographic applications into one of (a) a stringent requirement attribute and, (b) a non-stringent requirement attribute, to obtain a plurality of stringent requirement attributes, and a plurality of non-stringent requirement attributes, based on the plurality of application requirement attribute types. The method further includes obtaining (i) a plurality of compatible PQC libraries, and a plurality of non-compatible PQC libraries for each of the plurality of cryptographic applications based on the generated plurality of stringent requirement attributes, (ii) a plurality of first preference based PQC libraries, and a plurality of second preference based PQC libraries for each of the plurality of cryptographic applications based on the plurality of non-stringent requirement attributes and the plurality of library feature attributes, and (iii) a plurality of first compatible PQC libraries, and a plurality of second compatible PQC libraries of the plurality of cryptographic applications based on the plurality of non-stringent requirement attributes. The method further includes obtaining one or more candidate PQC libraries, for each of the plurality of cryptographic applications using the plurality of first compatible PQC libraries, and the plurality of second compatible PQC libraries. The method further includes selecting a plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements. The method further includes obtaining a scheme-library pair comprising a final optimal PQC scheme and a candidate PQC library of the one or more candidate PQC libraries, for each the plurality of classical cryptographic schemes associated with each of the plurality of cryptographic applications. The method further includes obtaining a one or more final candidate PQC libraries of the one or more candidate PQC libraries, using the scheme-library pair for each the plurality of classical cryptographic schemes of the plurality of cryptographic applications. The method further includes recommending the obtained one or more final candidate PQC libraries of the one or more candidate PQC libraries for the plurality of cryptographic applications of the enterprise.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for selection of Post-Quantum Cryptography (PQC) schemes and PQC libraries for cryptographic applications of an enterprise, according to some embodiments of the present disclosure.
FIG. 2 is a functional architecture depicting process flow of the system for selection of the PQC schemes and the PQC libraries for the cryptographic applications of an enterprise, according to some embodiments of the present disclosure.
FIGS. 3A, 3B and 3C depict a flow diagram of a method for selection of the PQC schemes and the PQC libraries for the cryptographic applications of an enterprise, according to some embodiments of the present disclosure.
FIG. 4 depicts a block diagram for selecting a plurality of optimal PQC schemes for each of one or more candidate PQC libraries, using a plurality of performance objective metrics and a plurality of application security requirements, according to some embodiments of the present disclosure.
FIG. 5 depicts a block diagram for obtaining a scheme-library pair comprising a final optimal PQC scheme and a candidate PQC library of the one or more candidate PQC libraries, according to some embodiments of the present disclosure.
FIG. 6 depicts a block diagram for obtaining the one or more final candidate PQC libraries of the one or more candidate PQC libraries, using the scheme-library pair for each of the plurality of classical cryptographic schemes associated with each of a plurality of cryptographic applications, according to some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Quantum computers have the potential to become a real security challenge for cryptographic applications of an enterprise. Hence the cryptographic applications require migrating to Post-quantum cryptography (PQC) by replacing classical cryptographic schemes with PQC schemes. The general steps in the PQC migration include inventory preparation, classification of vulnerable data assets, evaluation by security dependency analysis to prepare a road map for the PQC migration, remediation by risk assessment, evaluation, followed by a continuous review and update. The implementations of the PQC schemes by different PQC libraries and hardware are available along with performance data. The user is expected to select a suitable hardware specification, one or more PQC libraries which support the PQC schemes and application security requirements such that security criteria are met and application PQC migration overheads such as runtime, memory usage, communication cost, and computation cost do not exceed PQC migration budgets which are set by the user, or the enterprise, or an application owner. The problem of PQC migration dimensionally increased by the presence of (i) multiple classical cryptographic schemes in the application, (ii) multiple PQC libraries for implementing PQC/hybrid schemes, (iii) multiple PQC schemes for key encapsulation and digital signature purpose, (iv) more than one application security requirements for each of the cryptographic applications, (v) multiple application requirements (vi) library features. Also, non-numerical values like application demands and library supply attributes need to be mapped against one another by converting them to numerical data to provide an efficient PQC library selection recommendation. Hence recommending the optimal combination of the PQC schemes, and the PQC libraries for replacing the classical cryptographic schemes for the cryptographic application is challenging.

Embodiments herein provide a method and system for selection of the PQC schemes and the PQC libraries for the cryptographic applications. The method receives a plurality of cryptographic applications pertaining to the enterprise, a plurality of classical cryptographic schemes associated with the plurality of cryptographic applications, a plurality of PQC libraries, and a plurality of application requirement attributes. A plurality of first compatible PQC libraries, and a plurality of second compatible PQC libraries of the plurality of cryptographic applications are obtained based on a plurality of non-stringent requirement attributes of the plurality of application requirement attributes. One or more candidate PQC libraries, for each of the plurality of cryptographic applications are obtained using the plurality of first compatible PQC libraries, and the plurality of second compatible PQC libraries. Further a scheme-library pair comprising a final optimal PQC scheme and a candidate PQC library of the one or more candidate PQC libraries is obtained, for each the plurality of classical cryptographic schemes. Then one or more final candidate PQC libraries obtained using the scheme-library pair is recommended for the plurality of cryptographic applications of the enterprise.

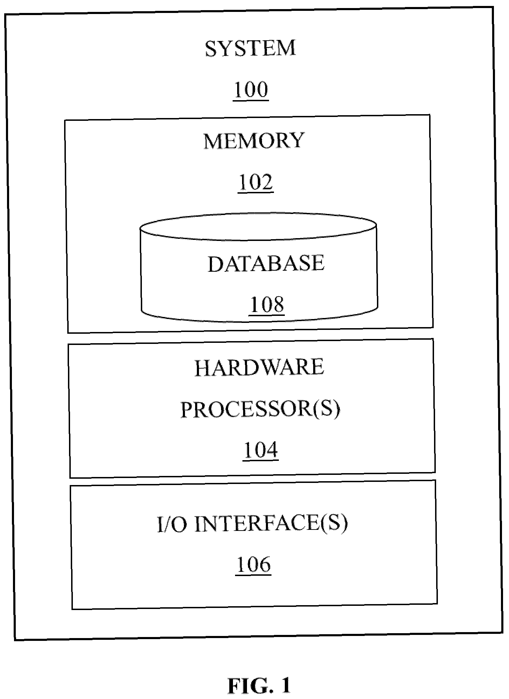

Referring now to the drawings, and more particularly to FIG. 1 through FIG. 6, where similar reference characters denote corresponding features consistently throughout the figures, there are shown preferred embodiments and these embodiments are described in the context of the following exemplary system and/or method.

FIG. 1 is a functional block diagram of a system 100 for selection of the PQC schemes and the PQC libraries for the cryptographic applications of the enterprise, according to some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on the plurality of cryptographic applications, the plurality of classical cryptographic schemes, a plurality of frequencies, the plurality of PQC libraries, a plurality of library feature attributes, the plurality of application requirement attributes, a plurality of mappings between the plurality of library feature attributes and the plurality of application requirement attributes, a plurality of application requirement attribute types, a plurality of performance objective metrics, and a plurality of application security requirements, and the like. The memory 102 further comprises a plurality of modules (not shown for various technique(s) such as, a Lowest Bound Maximiser, and thereof. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

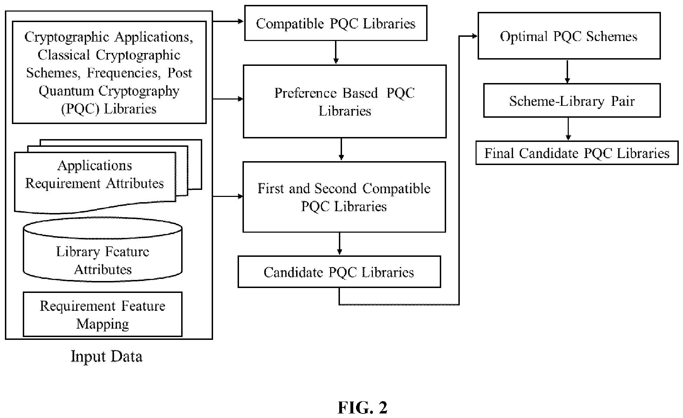

FIG. 2 depicts an architecture diagram of the system 100 for selection of the PQC schemes and the PQC libraries for the cryptographic applications of the enterprise, according to some embodiments of the present disclosure. An input data component of the FIG. 2 comprises the plurality of cryptographic applications pertaining to the enterprise, the plurality of classical cryptographic schemes associated with each of the plurality of cryptographic applications, the plurality of frequencies of a plurality of cryptographic operations associated with each of the plurality of classical cryptographic schemes, the plurality of PQC libraries, the plurality of library feature attributes associated with the plurality of PQC libraries, the plurality of application requirement attributes, the plurality of mappings between the plurality of library feature attributes and the plurality of application requirement attributes, the plurality of application requirement attribute types associated with the plurality of cryptographic applications, the plurality of performance objective metrics associated with the plurality of cryptographic applications, and the plurality of application security requirements associated with the plurality of cryptographic applications.

A plurality of compatible PQC libraries, and a plurality of non-compatible PQC libraries are obtained for each of the plurality of cryptographic applications based on a plurality of stringent requirement attributes from a Compatible PQC Libraries component. A plurality of first preference based PQC libraries, and a plurality of second preference based PQC libraries for each of the plurality of cryptographic applications are obtained based on the plurality of non-stringent requirement attributes and the plurality of library feature attributes from a Preference Based PQC Libraries component. The plurality of first compatible PQC libraries, and the plurality of second compatible PQC libraries of the plurality of cryptographic applications are obtained based on the plurality of non-stringent requirement attributes, from a First and Second Compatible PQC Libraries component as depicted in the FIG. 2. Further at a Candidate PQC Libraries component the one or more candidate PQC libraries are obtained for each of the plurality of cryptographic applications using the plurality of first compatible PQC libraries, and the plurality of second compatible PQC libraries.

Further, a plurality of optimal PQC schemes for each candidate PQC library of the one or more candidate PQC libraries of each of the plurality of classical cryptographic schemes associated with each of the plurality of cryptographic applications are selected, based on the plurality of performance objective metrics and the plurality of application security requirements at an Optimal PQC Schemes component of the FIG. 2. Then at a Scheme-Library Pair component of the FIG. 2 the scheme-library pair comprising the final optimal PQC scheme and the candidate PQC library of the one or more candidate PQC libraries is obtained for each of the plurality of classical cryptographic schemes associated with each of the plurality of cryptographic applications. The one or more final candidate PQC libraries of the one or more candidate PQC libraries is obtained using the scheme-library pair for each the plurality of classical cryptographic schemes of the plurality of cryptographic applications at a Final Candidate PQC Libraries component of FIG. 2. The obtained one or more final candidate PQC libraries of the one or more candidate PQC libraries for the plurality of cryptographic applications are recommended for the enterprise.

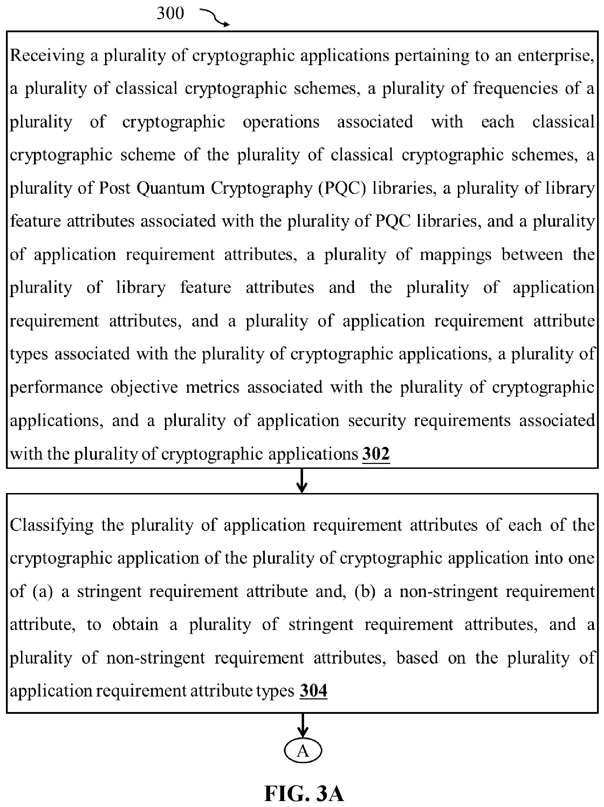

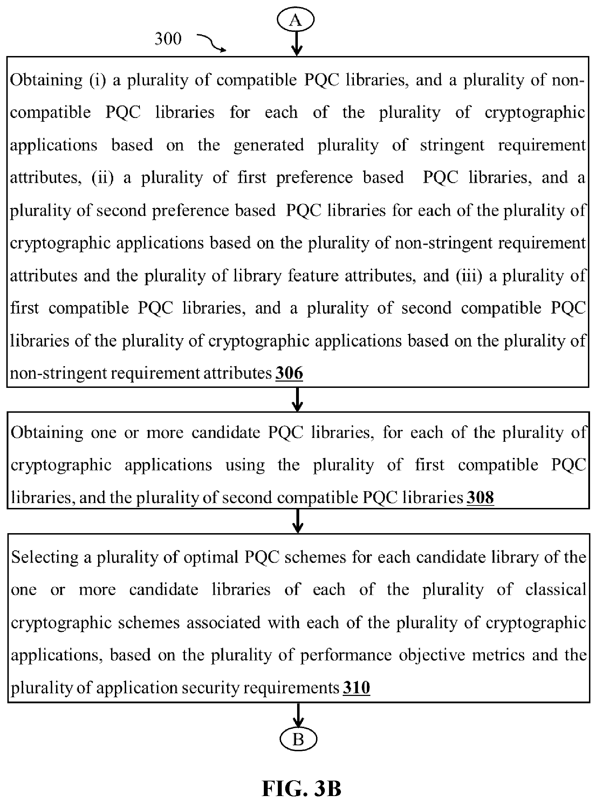

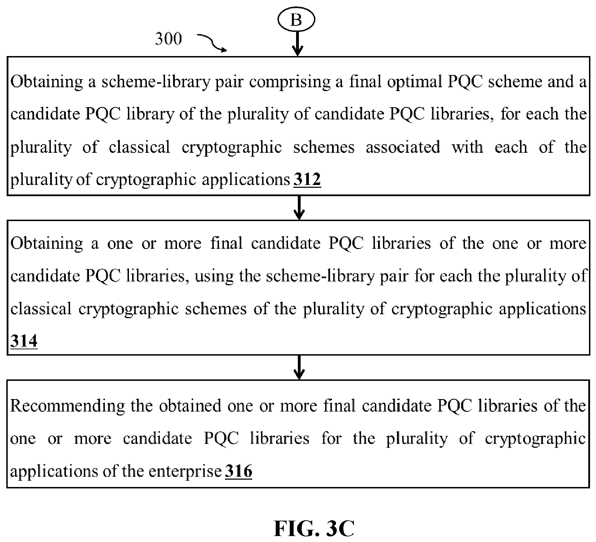

FIGS. 3A, 3B, and 3C is a flow diagram depicting a method 300 for selection of the PQC schemes and the PQC libraries for the cryptographic applications of the enterprise, using the system of FIG. 1, according to some embodiments of the present disclosure.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the architecture diagram depicted in FIG. 2, and the steps of flow diagram as depicted in FIGS. 3A, 3B, and 3C. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practically. Further, some steps may be performed simultaneously.

Referring to steps of FIG. 3A, at step 302 of the method 300, the one or more hardware processors 104 are configured to receive the plurality of cryptographic applications pertaining to the enterprise, the plurality of classical cryptographic schemes associated with each of the plurality of cryptographic applications, the plurality of frequencies of the plurality of cryptographic operations associated with each classical cryptographic scheme of the plurality of classical cryptographic schemes, the plurality of PQC libraries, the plurality of library feature attributes associated with the plurality of PQC libraries, the plurality of application requirement attributes, the plurality of mappings between the plurality of library feature attributes and the plurality of application requirement attributes, the plurality of application requirement attribute types associated with the plurality of cryptographic applications, the plurality of performance objective metrics associated with the plurality of cryptographic applications, and the plurality of application security requirements associated with the plurality of cryptographic applications.

The plurality of cryptographic applications pertains to multiple cryptographic applications of the enterprise for which combination of the plurality of optimal PQC schemes, and the one or more final candidate PQC libraries need to be obtained for replacing the plurality of classical cryptographic schemes. The plurality of classical cryptographic schemes refers to the classical cryptographic algorithms such as public key algorithms (Rivest-Shamir-Adleman (RSA), Elliptic Curve Digital Signature Algorithm (ECDSA)), digital signature algorithms (Elliptic Curve Digital Signature Algorithm (ECDSA)), symmetric encryption algorithms (Advanced Encryption Standard (AES), Data Encryption Standard (DES)), hashing algorithms (Secure Hash Algorithm (SHA)), authentication algorithms (Message Authentication Code (MAC)), and thereof.

The plurality of cryptographic operations comprises a key generation, an encryption, a decryption, a sign, a verify, hashing, authentication, and thereof. The plurality of frequencies comprises total count of the plurality of cryptographic operations like the key generation, the encryption, the decryption, the sign, the verify, hashing, and authentication associated with each of the plurality of classical cryptographic schemes.

A sample application data of the enterprise comprises the plurality of classical cryptographic schemes, and the plurality of cryptographic operations is as shown in Table. 1 and Table. 2.

**Table. 1**

| Schemes Category | KEM | | | SIG | | |
|---|---|---|---|---|---|---|
| | (Key Encapsulation Mechanism) | | | (Digital Signature) | | |
| Classical Cryptographic Schemes | RSA | | | ECDSA | | |
| Cryptographic Operations | keygen | Encap | Decap | keygen | sign | verify |
| Application (A1) calls | 1 | 6 | 6 | 1 | 3 | 3 |

**Table. 2**

| Schemes Category | SYM (Symmetric Schemes) | | | | | | | |
|---|---|---|---|---|---|---|---|---|
| Classical Cryptographic Schemes | AES | | | DES | | | SHA | MAC |
| Cryptographic Operations | keygen | Encap | decap | keygen | encap | decap | Hash | Auth |
| Application (A1) calls | 1 | 50 | 50 | 1 | 40 | 40 | 60 | 6 |

The plurality of PQC libraries comprises Library for Quantum-Resistant Cryptographic Algorithms (Liboqs), Open Secure Sockets Layer (OpenSSL), Post-Quantum Cryptography Clean (PQCClean), Post-Quantum Cryptography (PQCrypto), Cryptography Algorithms based on Lattices (Crystals), N-th degree Truncated Polynomial Ring Encryption (NTRUEncrypt), and thereof. The plurality of PQC libraries could be either open-source or commercial. The plurality of PQC libraries offer different PQC scheme implementations which differ in performance. One or more PQC libraries of the plurality of PQC libraries can support the same PQC hybrid scheme but with varying performance data. The plurality of library feature attributes of the plurality of PQC libraries comprises language support, Operating System (OS) support, optimized implementation, security, and compliance. The plurality of application requirement attributes comprises language specification, OS specification, application data storage timeline, criticality, risk profile, and migration priority. The plurality of performance objective metrics comprises a total runtime, a total memory usage, a total computational cost, and a total communication cost. The plurality of application security requirements are the standard security levels provided by National Institute of Standards and Technology (NIST).

At step 304 of the method 300, the one or more hardware processors 104 are configured to classify the plurality of application requirement attributes of each of the cryptographic application of the plurality of cryptographic application into one of (a) a stringent requirement attribute and, (b) a non-stringent requirement attribute, to obtain the plurality of stringent requirement attributes, and the plurality of non-stringent requirement attributes, based on the plurality of application requirement attribute types.

For each cryptographic application ($app_i$) of the plurality of cryptographic applications, the plurality of application requirement attributes ($Re_x$) is classified as one of the stringent requirement attribute ( $Re_x^S$ ), and the non-stringent requirement attribute ( $Re_x^{S'}$ ) based on the plurality of application requirement attribute types. The plurality of stringent requirement attributes comprises language specification, and OS specification that help to eliminate the plurality of PQC libraries which do not support the language specifications and the OS specifications. Examples of the plurality of stringent requirement attributes include Language Specification: Java, Python, and OS Support: Linux or Windows. The plurality of non-stringent requirement attributes like application data storage timeline which can be {high, low, or medium} do not eliminate the plurality of PQC libraries but helps to distinguish the plurality of PQC libraries as the first preference based PQC libraries, and the second preference based PQC libraries. Examples of the plurality of non-stringent requirement attributes include application data storage timeline, and migration priority {high, medium low}, and thereof.

Upon classification of the plurality of application requirement attributes into one of (a) the stringent requirement attribute and, (b) the non-stringent requirement attribute, at step 304 of the method 300, the one or more hardware processors 104 are configured to obtain (i) the plurality of compatible PQC libraries, and the plurality of non-compatible PQC libraries for each of the plurality of cryptographic applications based on the generated plurality of stringent requirement attributes, (ii) the plurality of first preference based PQC libraries, and the plurality of second preference based PQC libraries for each of the plurality of cryptographic applications based on the plurality of non-stringent requirement attributes and the plurality of library feature attributes, and (iii) the plurality of first compatible PQC libraries, and the plurality of second compatible PQC libraries of the plurality of cryptographic applications based on the plurality of non-stringent requirement attributes.

The plurality of compatible PQC libraries, and the plurality of non-compatible PQC libraries for each of the plurality of cryptographic applications is obtained for the generated plurality of stringent requirement attributes by:

(a) A compatibility score of each of the plurality of cryptographic applications is computed with each of the plurality of PQC libraries for the generated plurality of stringent attributes by:

$$comp(app_i, lib_l) = \prod_{x=1}^{|o|} \mathcal{R}(app_i, Re_x^S.r_z) * \mathbf{F}(lib_l, Re_x^S.r_z) \qquad (1)$$

where $app_i$ is the cryptographic application of the plurality of cryptographic applications;

$Re_x^S$ represents the stringent requirement attribute, where $S$ denotes stringent and $x$ is the index for attribute;
$lib_l$ represents a PQC library of the plurality of PQC libraries;
$|o|$ represents total count of plurality of stringent requirement attributes;
$F$ represents an indicator where if PQC library $lib_l$ supports the stringent requirement attribute then $F$ is 1, else 0; and
$r_z$ represents options associated with a stringent requirement attribute

(b) The plurality of non-compatible PQC libraries of the plurality of PQC libraries is identified, based on the computed compatibility score.
(c) The identified plurality of non-compatible PQC libraries from the plurality of PQC libraries is eliminated, to obtain the plurality of compatible PQC libraries. If $comp(app_i, lib_l) > 0$, the PQC library is retained as a compatible PQC library, else the PQC library is discarded as a non-compatible PQC library, generating the plurality of compatible PQC libraries for each of the plurality of cryptographic applications.

For example: for each of the stringent requirement attribute $\mathcal{R}(app_i, Re_x^S)$ represented as $\mathcal{R}$ ($app_i$,"lan-

guage spec."), total options |o| under each of the stringent requirement attribute : $(Re_x^S . r_z)$ represented as $Re_x^S . r_1$ :

Java; $Re_x^S . r_2$ : Python;....., $Re_x^S . r_o$ : C++. Then $\mathcal{R}(app_i, \ Re_x^S . r_z) = [1, \ 1, 0, . . , 0]$ for, "language spec."-Java, Python, C++. For each of the PQC library ($lib_l$), supported options are listed under that stringent requirement attribute

to obtain: $F(lib_l, Re_x^S . r_z) = [1, \ 1, 0, \ . . , 1]$ for "language spec."-Java, Python, C++.

The plurality of first preference based PQC libraries, and the plurality of second preference based PQC libraries for each of the plurality of classical cryptographic applications for the plurality of non-stringent requirement attributes are obtained by:

(a) A library utility value of the cryptographic application with each of the plurality of compatible PQC libraries is computed for the generated plurality of non-stringent attributes. For each of the non-stringent requirement attribute (

$Re_x^{S'}$ ) of the cryptographic application, the library utility value with each of the plurality of compatible PQC libraries ($Clib_l$) is computed as:

$$util\left(app_i . Re_x^{S'}, \ Clib_l\right) = \sum_{y=1}^{|f|}(Clib_l . \ Fe_y . val - app_i . Re_x^{S'} . val) \qquad (2)$$

where $app_i$ is the cryptographic application of the plurality of cryptographic applications;

$Re_x^{S'}$ represents the non-stringent requirement attribute;

$Clib_l$ represents a compatible PQC library of the plurality of compatible PQC libraries;

|f| represents number of the plurality of library feature attributes which cater to the each of the plurality of non-stringent requirement attributes;

$Fe_y . val$ represents a library feature value of the plurality of library feature attributes; and

$Re_x^{S'} . val$ represents an application requirement value of an application requirement attribute of the plurality of application requirement attributes.

(b) Obtaining the plurality of first preference based PQC libraries, and the plurality of second preference based preferred PQC libraries of the cryptographic application based on the library utility value, the plurality of library feature attributes, and the plurality of mapping between the plurality of library feature attributes and the plurality of application requirement attributes. If $util(app_i, lib_l) \geq 0$, the corresponding plurality of compatible PQC library ($lib_l$) is categorized as a first preference based PQC library of the plurality of first preference based PQC libraries and if $util(app_i, lib_l) < 0$, the corresponding compatible PQC library of the plurality of compatible PQC libraries is categorized as a second preference based preferred PQC library of the plurality of second preference based PQC libraries. The plurality of first preference based PQC libraries are most preferred PQC libraries of the cryptographic application and the plurality of second preference based preferred PQC libraries are least preferred PQC libraries of the cryptographic application, according to some embodiments of the present disclosure.

For example: for each of the non-stringent requirement attribute ( $Re_x^{S'}$ ) of the cryptographic application ($app_i$):

$app_i . Re_x^{S'} . val$ are obtained as ex: {low(0.0), medium(0.5), high(1.0), the plurality of library feature attributes (|f|) of the plurality of application requirement attributes {$Fe_1, .., Fe_f$} are listed, for plurality of compatible PQC libraries ($lib_l$), then a plurality of library feature values {$lib_l . \ Fe_1 . val, ..., lib_l . Fe_f . val$} of the plurality of library feature attributes is obtained.

Upon obtaining the plurality of first preference based PQC libraries, and the plurality of second preference based PQC libraries for each of the plurality of classical cryptographic applications, the plurality of first compatible PQC libraries, and the plurality of second compatible PQC libraries of the cryptographic application are generated based on the plurality of first preference based PQC libraries, and the plurality of second preference based PQC libraries for the non-stringent requirement attributes by:

(a) Counting a total number of the plurality of non-stringent requirement attributes of the cryptographic application, to generate a non-stringent attribute count. The total number of the plurality of non-stringent requirement attributes $\left(app_i . Re_x^{S'}\right)$ is given by: |R|.

(b) Checking for each of the first preference based PQC library of the plurality of first preference based PQC libraries if the plurality of non-stringent requirement attributes of the cryptographic application is greater than a predefined percentage of the non-stringent attribute count. If the plurality of non-stringent requirement attributes of the cryptographic application is greater than the predefined percentage of the non-stringent attribute count the associated first preference based PQC library is categorized as a first compatible PQC library of the plurality of compatible PQC libraries, else categorized as a second compatible PQC library of the plurality of second compatible PQC libraries. The predefined percentage of the non-stringent requirement count of $app_i . Re_x^{s'}$ is counted for which the $lib_l$ comes under a first preference based PQC library of the plurality of first preference based PQC libraries as $|r|$. If $|r| \geq \theta |R|$: the $lib_l$ is placed under the plurality of first compatible PQC libraries, else the $lib_l$ placed under the plurality of second compatible PQC libraries. The predefined percentage of the non-stringent attribute count should be greater than $x\%$ (e,g., 50 percentage ($\theta = 0.5$)), according to some embodiments of the present disclosure. The plurality of first compatible PQC libraries of the cryptographic application are referred to as most compatible PQC libraries, and the plurality of second compatible PQC libraries are referred to as less compatible PQC libraries of the cryptographic application, according to some embodiments of the present disclosure.

Upon obtaining the plurality of first compatible PQC libraries, and the plurality of second compatible PQC libraries for each of the plurality of cryptographic applications, at step 308 of the method 300, the one or more hardware processors 104 are configured to obtain the one or more candidate PQC libraries, for each of the plurality of cryptographic applications using the plurality of first compatible PQC libraries, and the plurality of second compatible PQC libraries. A checking is performed if the cryptographic application has more than a predefined number of the plurality of first compatible PQC libraries. If the check is successful, the plurality of first compatible PQC libraries form the one or more candidate PQC libraries. If the cryptographic application has less than the predefined number of the plurality of first compatible PQC libraries, then a predefined percentage of the plurality of second compatible PQC libraries are added to make up the one or more candidate PQC libraries. Each of the one or more candidate PQC libraries comprises a plurality of PQC schemes.

The pseudocode for obtaining the one or more candidate PQC libraries, for each of the plurality of cryptographic applications using the plurality of first compatible PQC libraries, and the plurality of second compatible PQC libraries is as follows:

for each $app_i$ with the plurality of compatible libraries $|CL|$, the plurality of first compatible PQC libraries ($FCL$), and the plurality of second compatible PQC libraries $(SCL)$;

if $app_i$ has $\geq \eta |CL|$ in the plurality of first compatible PQC libraries ($FCL$) $\rightarrow$ add the plurality of first compatible PQC libraries to $app_i . candlist$ ($\eta = 0.5$);
if $app_i$ has $< \eta |CL|$ in the plurality of first compatible PQC libraries ($FCL$) // not enough PQC libraries in ($FCL$), select $\eta |SCL|$ the plurality of second compatible PQC libraries ($SCL$) // taking half of libraries from the $(SCL)$;

if $\eta |SCL| \geq (\eta |CL| - |FCL|) \rightarrow$ Transfer $(\eta |CL| - |FCL|)$ plurality of second compatible PQC libraries from $SCL$ to $FCL$ // if that half is sufficient;
if $\eta |SCL| < (\eta |CL| - |FCL|) \rightarrow$ Transfer $\eta |SCL|$ plurality of second compatible PQC libraries from $SCL$ to $FCL$; // if that half is not sufficient

add the plurality of first compatible PQC libraries in $FCL$ to the $app_i . candlist$ outcome: the one or more candidate PQC libraries, for each of the plurality of cryptographic applications.

The objective here is to obtain the plurality of optimal PQC schemes for each of the cryptographic application of the plurality of cryptographic applications of the enterprise. However, evaluating each of the plurality of the PQC libraries and the plurality of PQC schemes would result in very high computation. Further with the plurality of application requirement attributes, and the plurality of library feature attributes and their compatibility issues, it becomes tedious and challenging for any human expert. The step 308 of the disclosed method 300 reduces the complexity problem, by selecting the one or more candidate PQC libraries, for each of the plurality of cryptographic applications. The problem size is reduced by $\eta \sim 50\%$. $\eta(|L|)$. Hence the one or more candidate PQC libraries are selected for each of the plurality of cryptographic applications is $\eta \approx 0.5$.

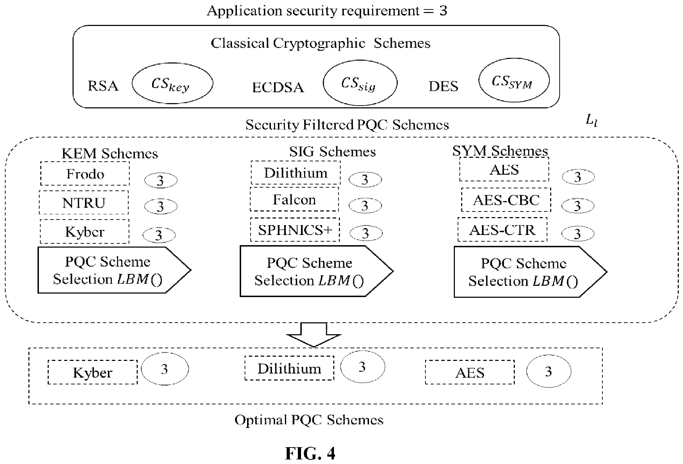

Once the one or more candidate PQC libraries are obtained, for each of the plurality of cryptographic applications, at step 310 of the method 300, the one or more hardware processors 104 are configured to select the plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements. FIG. 4 depicts a block diagram for selecting the plurality of optimal PQC schemes for each of the one or more candidate PQC libraries, using the plurality of performance objective metrics and the plurality of application security requirements, according to some embodiments of the present disclosure. Initially the plurality of classical cryptographic schemes, and the plurality of PQC schemes are received for each of the one or more candidate PQC libraries of the cryptographic application. Then the plurality of PQC schemes based on an application security requirement of the plurality of application security requirements for each of the one or more candidate PQC libraries of the cryptographic application are filtered, to generate a plurality of security filtered PQC schemes as shown in FIG. 4. Further the plurality of performance objective metrics is computed using the plurality of frequencies of the plurality of cryptographic operations for each of the plurality of security filtered PQC schemes of each of the one or more candidate PQC libraries. Further the plurality of optimal PQC schemes is selected from the plurality of security filtered PQC schemes for the plurality of classical cryptographic schemes associated with each of the plurality of cryptographic applications using a Lowest Bound Maximiser (LBM) based on the plurality of performance objective metrics. The procedure for Lowest Bound Maximiser (LBM) is as follows:

initially LBM score $\partial = 0$;

for each of the plurality of performance objective metric: compute $\Delta = |obj_o^X - obj_o^Y|, \nabla = obj_o^X$;

where $obj_o^X, obj_o^Y$ are the values of the plurality of performance objective metrics ($o$) for two the plurality of PQC schemes $X$ and $Y$ to be compared if $obj_o^Y \leq obj_o^X \rightarrow$ compute $\partial = \partial + (1 - \Delta/\nabla)$ for each of the plurality of performance objective metrics; and

else $obj_o^Y > obj_o^X \rightarrow$ compute $\partial = \partial + \Delta/\nabla$ for each of the plurality of performance objective metrics.

The pseudocode for selecting the plurality of optimal PQC schemes for each candidate PQC library of the one or more candidate PQC libraries of each of the plurality of classical cryptographic schemes is as follows:
for each of the plurality of the classical cryptographic schemes in the cryptographic application,

select the candidate PQC library of the one or more candidate PQC libraries for evaluation of the cryptographic application,
for each classical cryptographic scheme of the cryptographic application ($app_i.CS_l$),

filter the plurality PQC schemes for each of the candidate PQC library as per the plurality of application security requirements;
select the optimal PQC scheme ($PS_j^\lambda$) with minimum $\lambda$ such that $\lambda \geq \lambda_{req}$: the plurality of security filtered PQC schemes,
compute plurality of performance obj ective metrics for the optimal PQC scheme,

$$pqc : \left(app_i.CS_l, L_l.PS_j^\lambda\right).obj_o \forall obj_o$$

set it as a $optimalpqc = PS_{j_0}^\lambda$

compare the remaining plurality of security filtered PQC schemes ($PS_j^\lambda$) with the optimal PQC scheme

$$\partial\left(PS_j^\lambda\right) = LBM\left(\left(app_i.CS_l, L_l.optimalpqc\right), \left(app_i.CS_l, L_l.PS_j^\lambda\right)\right)$$

If $\partial\left(PS_j^\lambda\right) \geq 0$ // checking if the next security filtered PQC scheme is better in terms of the plurality of performance objective metrics

Set *optimal* $pqc = PS_j^\lambda$ // Update the current optimal

For example, consider for each of the cryptographic application, there are |P| the plurality of PQC schemes available of same category from each of the $\eta|L|$ one or more candidate PQC libraries. Each of the associated PQC scheme is represented by $PS_j^\lambda$ where j=(1,2,3,...|P|) denotes the number of the plurality of PQC schemes for that category in the one or more candidate PQC libraries, and λ=(1,2,3,4,5) denotes the plurality of application security requirements defined by the NIST of the associated PQC scheme. Also, each of the cryptographic application has an application security requirement ($\lambda_{req}$). For the associated PQC scheme whose application security requirementt ($\lambda$) is less than application security requirement is first discarded ($\lambda < \lambda_{req}$). If the associated PQC scheme with application security requirementt ($\lambda$) is available such that ($\lambda = \lambda_{req}$) then only that associated PQC scheme is selected and other PQC schemes are discarded for all ($\lambda$) for which ($\lambda > \lambda_{req}$) since higher than required application security requirements would increase Performance Objective Metrics (POM) overheads. If the PQC scheme with required security level ($\lambda = \lambda_{req}$) is not available, then next PQC scheme with higher application security requirements ($\lambda' > \lambda_{req}$) is selected while discarding the remaining PQC schemes such that ($\lambda > \lambda'$).

The plurality of performance objective metrics comprises the total runtime, the total memory usage, the total computation cost, the total communication cost. The total runtime corresponds to the runtime of the cryptographic application after migration to the final optimal PQC scheme. The total memory corresponds to memory consumed by the cryptographic application after migration to the final optimal PQC scheme. The total computation cost, which is the cost of total resources consumed for executing the cryptographic application post migration to the final optimal PQC scheme is computed as:

$$C^a_{comp} = \omega^a_t \cdot C^a_{time} + \omega^a_m \cdot C^a_{mem} \qquad (3)$$

$C^a_{comp}$ represents total computation cost of application *a*;

$C^a_{time}$ represents total computation time of the application *a*;

$C^a_{mem}$ represents total computation memory of the application *a*;

$\omega^a_t$ represents weight/priority/coefficient of the computation time of the application *a*; and

$\omega^a_m$ represents weight/priority/coefficient of the computation memory of the application *a*.

The $C^a_{time}$ that is defined as amount of time required by the final optimal PQC scheme to perform the plurality of cryptographic operations, such as the key generation, the encryption, the decryption, the signing, and the verification is computed as:

$$C^a_{time} = \sum_{i \in S_a} \sum_{k \in O_i} \sum_{j \in P} \sum_{l \in L} N^a_{ik} \cdot \tau_{jkl} \qquad (4)$$

$S_a$ represents a plurality of classical cryptographic schemes in each of the plurality of cryptographic applications;
$O_i$: plurality of cryptographic operations of the plurality of classical cryptographic schemes;
*P* represents plurality of classical cryptographic schemes of each of the plurality of PQC libraries (*l*);

where *i* is index for classical cryptographic schemes RSA, ECDSA, AES, DES, and thereof;
*k* is index for the plurality of cryptographic operations like {Keygen, Encap, Decap, Sign, Verify};
*j* is index for the plurality of PQC schemes;
*l* is index for the one or more final candidate PQC libraries;

a is index of the index for the plurality of cryptographic applications {$A_1, A_2, ..., A_n$}; $N^a_{ik}$ represents number of calls of operation *k* of the classical cryptographic scheme *i* in application *a*; and
$\tau_{jkl}$ is time required for operation *k* of the optimal PQC scheme *j* on the final candidate PQC library *l*.

The $C^a_{mem}$ that pertains to memory resources required by the final optimal PQC scheme during its execution of the plurality of cryptographic operations is defined as:

$$C^a_{mem} = \sum_{i \in S_a} \sum_{k \in O_i} \sum_{j \in P} \sum_{l \in L} N^a_{ik} \cdot \mu_{jkl} \qquad (5)$$

where $\mu_{jkl}$ is total memory required for operation *k* of optimal PQC scheme *j* on the final candidate PQC library *l*.
The total communication cost of the data transferred for executing the cryptographic application post migration to the final optimal PQC scheme between the user and the system 100 during the plurality of cryptographic operations is defined as:

$$C_{comm}^a = \omega_{pk}^a \cdot C_{pk}^a + \omega_{ct}^a \cdot C_{ct}^a \qquad (6)$$

$\omega_{pk}^a$ : weight of public key size of each of the plurality of PQC schemes; and

$\omega_{ct}^a$ : weight of each of the plurality of PQC schemes.

$C_{pk}^a$ is a public key size used in a classical cryptographic scheme of the plurality of classical cryptographic schemes that is made publicly available for encrypting data or verifying signatures is defined as:

$$C_{pk}^a = \sum_{i \in S_a} \sum_{j \in P} \sum_{k \in O} \sum_{l \in L} N_{ik}^a \cdot \kappa_j \qquad (7)$$

$S_a$: the plurality of classical cryptographic schemes in each of the plurality of cryptography applications, where $\kappa_j$ is public key size of the optimal PQC scheme $j$.

The $C_{ct}^a$ is encrypted data produced by the optimal PQC scheme is defined as:

$$C_{ct}^a = \sum_{i \in S_a} \sum_{j \in P} \sum_{k \in O} \sum_{l \in L} N_{ik}^a \cdot \gamma_j \qquad (8)$$

where $\gamma_j$ represents ciphertext/signature/digest size of the final optimal PQC scheme $j$.

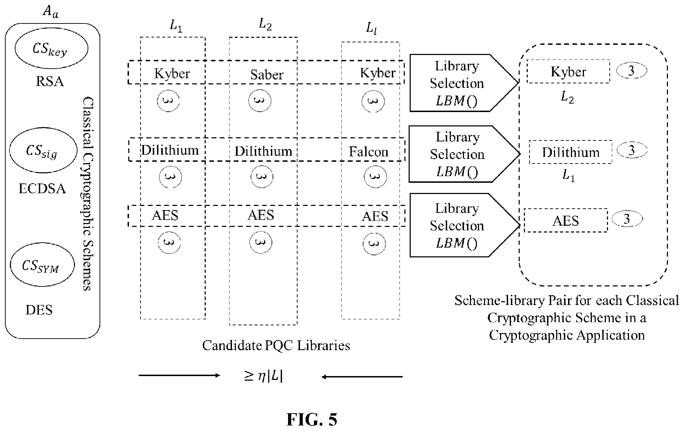

Upon selecting the plurality of optimal PQC schemes for each candidate PQC library of the one or more candidate PQC libraries, at step 312 of the method 300, the one or more hardware processors 104 are configured to obtain the scheme-library pair comprising the final optimal PQC scheme and the candidate PQC library of the one or more candidate PQC libraries, for each the plurality of classical cryptographic schemes associated with each of the plurality of cryptographic applications. FIG. 5 depicts a block diagram for obtaining the scheme-library pair comprising the final optimal PQC scheme and the candidate PQC library of the one or more candidate PQC libraries, according to some embodiments of the present disclosure. An LBM score for the plurality of optimal PQC schemes is computed and the scheme-library pair comprising the final optimal PQC scheme and the candidate PQC library of the one or more candidate PQC libraries is obtained, by comparing each of the plurality of optimal PQC schemes among the plurality of optimal PQC schemes for each of the candidate PQC library of the one or more candidate PQC libraries based on the computed LBM score. The pseudo code for obtaining the scheme-library pair comprising the final optimal PQC scheme and the candidate PQC library of the one or more candidate PQC libraries, for each the plurality of classical cryptographic schemes associated with each of the plurality of cryptographic applications is as follows:

For each of the classical cryptographic scheme of the cryptographic application ($app_i.CS_l$)

Compare the plurality of optimal PQC schemes obtained at step 310 of the method 300 and select the scheme-library pair for each of the one or more candidate PQC libraries;
Listing plurality of optimal PQC schemes of the same category from one or more candidate PQC libraries(

$L_l.PS_j^\lambda$ ) : *pqcliblist*

Select the first $L_l.PS_j^\lambda$ from $pqcliblist \rightarrow L_u.PS_j^\lambda$ // select the first candidate library

Set $optimallib = L_u.PS_j^\lambda$ // set it as optimal PQC scheme

For each remaining $L_v.PS_j^\lambda$ in *pqcliblist* // comparing with remaining one or more candidate PQC libraries

Do $\partial(L_v.PS_j^\lambda) = LBM\left((app_i.CS_l, optimallib), (app_i.CS_l, L_v.PS_j^\lambda)\right)$

If $\partial(L_v.PS_j^\lambda) \geq 0$ // checking if the next PQC scheme is better in terms of the plurality of performance objective metrics

Set $libpqcpair = L_v . PS_j^{\lambda}$ // updating current best

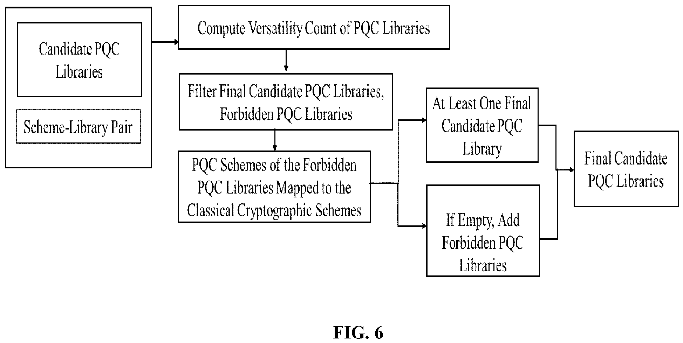

Once the scheme-library pair comprising the final optimal PQC scheme and the candidate PQC library of the one or more candidate PQC libraries is obtained for each the plurality of classical cryptographic schemes associated with each of the plurality of cryptographic applications, at step 314 of the method 300, the one or more hardware processors 104 are configured to obtain the one or more final candidate PQC libraries of the one or more candidate PQC libraries, using the scheme-library pair for each the plurality of classical cryptographic schemes of the plurality of cryptographic applications. FIG. 6 depicts a block diagram for obtaining the one or more final candidate PQC libraries of the one or more candidate PQC libraries, using the scheme-library pair for each of the plurality of classical cryptographic schemes associated with each of a plurality of cryptographic application, according to some embodiments of the present disclosure. A versatility count of the candidate PQC library of the one or more candidate PQC libraries is computed by: obtaining the versatility count of the plurality of classical cryptographic schemes associated with each of the plurality of cryptographic applications that are mapped to each of the candidate PQC library of the one or more of PQC libraries. Then one or more final candidate PQC libraries of the one or more of PQC libraries are obtained based on the versatility count. A plurality of remaining PQC libraries of the plurality of PQC libraries are listed as a plurality of forbidden PQC libraries. The versatility count of the candidate PQC library of the one or more candidate PQC libraries is computed by:

$$vercount_{L_l} = \sum_{app=1}^{|A|} \sum_{cs=1}^{|N|} x_{app} * y_{cs} \qquad (9)$$

where |A| is the number of the cryptographic applications,
|N| is the number of classical cryptographic schemes in each cryptographic application, and
$x_{app}$ and $y_{cs}$ are decision variables which can be 0 or 1.

Once the plurality of forbidden PQC libraries is listed, the plurality of classical cryptographic schemes associated with each of the plurality of cryptographic applications that are mapped to the plurality of forbidden PQC libraries are obtained. Further the plurality of PQC schemes is obtained from the plurality of forbidden PQC libraries that are mapped to the plurality of classical cryptographic schemes associated with each of the plurality of cryptographic applications. Finally, the one or more final candidate PQC libraries which contain the plurality of PQC schemes from the plurality of forbidden PQC libraries are obtained. If at least one final candidate PQC library of the one or more final candidate PQC libraries is obtained, the scheme-library pair is selected by using the LBM. If the one or more final candidate PQC libraries is empty, then the plurality of forbidden PQC libraries are added to the one or more final candidate PQC libraries.

**Experimental Results**

The disclosed method 300 was implemented by considering five cryptographic applications {A1, A2, A3, A4, A5} and six PQC libraries: [Lib1, Lib2, Lib3, Lib4, Lib5, Lib6]. Application Programming Interface (API) calls with two classical cryptographic schemes {RSA, ECDSA} are considered from each of the cryptographic application for PQC replacement. As the replacement of asymmetric key crypto systems {RSA, ECDSA} by PQC schemes (ex: Kyber, Dilithium) results in higher performance overheads, the API calls with two classical schemes {RSA, ECDSA} from each cryptographic application are considered for PQC scheme replacement. The plurality of application requirement attributes for five cryptographic applications are shown in Table. 3 and Table. 4 below.

**Table. 3**

| Cryptographic Applications | Programming Language | Operating System |
| --- | --- | --- |
| A1 | Java | macOS |
| A2 | Python | Linux |
| A3 | Python | Windows |
| A4 | Python | Linux |
| A5 | C | Linux |

**Table. 4**

| Cryptographic Applications | Non-stringent Requirement Attributes | | | | |
|---|---|---|---|---|---|
| | Data Storage Timeline | Migration Priority | Risk Assessment | Re4 | Re5 |
| A1 | Medium | High | Medium | Medium | Medium |
| A2 | Medium | High | Medium | Medium | Low |
| A3 | High | Medium | Medium | Low | High |
| A4 | Medium | High | Medium | Medium | Medium |
| A5 | Medium | Low | Medium | Medium | High |

The plurality of cryptographic applications of the enterprise would have similar type of the plurality of stringent requirement attributes and the plurality of non-stringent requirement attributes. The plurality of stringent requirement attributes includes Programming Language, and Operating System. The plurality of non-stringent requirement attributes includes Application Data Storage Timeline, Migration Priority, Risk Assessment, and other non-stringent requirements (Re4, Re5) which could be added when required. The cryptographic application having the plurality of classical cryptographic schemes such as RSA and ECDSA, contains a plurality of cryptographic operation calls shown in Table. 5.

**Table. 5**

| Cryptographic Applications | Classical Cryptographic Scheme and Cryptographic Opereations | | | | | |
|---|---|---|---|---|---|---|
| | RSA (KEM) | | | ECDSA (SIG) | | |
| | keygen | Encap | Decap | Keygen | Sign | Verify |
| A1 | 1 | 493 | 493 | 1 | 402 | 402 |
| A2 | 1 | 96 | 96 | 1 | 47 | 47 |
| A3 | 0 | 0 | 0 | 1 | 189 | 189 |
| A4 | 0 | 0 | 0 | 1 | 156 | 156 |
| A5 | 1 | 474 | 474 | 0 | 0 | 0 |

Some of the plurality of PQC libraries are open source such as Liboqs, while some implementations are done by vendors such as PQCSecure, and PQCShield. Each of the plurality of PQC libraries has several features which cater to the stringent requirement attribute and the non-stringent requirement attribute of the cryptographic application. The data pertaining to features and supported by the plurality of PQC Schemes is shown in Table. 6, and Table. 7

**Table. 6**

| Library | Category | Supported PQC Scheme | Stringent Requirement Attributes | |
|---|---|---|---|---|
| | | | Supported Programming Languages | Supported Operating Systems |
| Lib1 | Open source | Kyber, McEliece, SABER, FrodoKEM, Dilithium, Falcon, SPHINCS+ | C, C++, Python, Java, | Linux, Windows, macOS |
| Lib2 | Commercial | Kyber, FrodoKEM, Dilithium, Falcon, SPHINCS+ | C, C++, Python, Java | Linux, Windows, macOS |
| Lib3 | Commercial | Kyber, NTRU, Frodo, Dilithium, Falcon, SPHINCS+ | C, C++, Python, JavaScript | Linux, Windows, macOS |
| Lib4 | Commercial | Kyber, Dilithium | C, C++, Java, JavaScript, Python | Linux, Windows, macOS |
| Lib5 | Commercial | Kyber, Dilithium, SPHINCS+ | C, C++, Python, Java, Node.js | Linux, Windows, macOS |

(continued)

| Library | Category | Supported PQC Scheme | Stringent Requirement Attributes | |
|---|---|---|---|---|
| | | | Supported Programming Languages | Supported Operating Systems |
| Lib6 | Commercial | Kyber, NTRU, Dilithium, Falcon, SPHINCS+ | C, C++, Python, Java | Linux, Windows |

**Table. 7**

| Library | Category | Supported PQC Scheme | Non-stringent Requirement Attributes (Low-L, Medium-M, High -H) | | | | |
|---|---|---|---|---|---|---|---|
| | | | f1 | f2 | f3 | f4 | f5 |
| Lib1 | Open source | Kyber, McEliece, SABER, FrodoKEM, Dilithium, Falcon, SPHINCS+ | M | L | M | L | M |
| Lib2 | Commercial | Kyber, FrodoKEM, Dilithium, Falcon, SPHINCS+ | H | H | H | H | H |
| Lib3 | Commercial | Kyber, NTRU, Frodo, Dilithium, Falcon, SPHINCS+ | H | H | H | H | H |
| Lib4 | Commercial | Kyber, Dilithium | H | H | H | L | H |
| Lib5 | Commercial | Kyber, Dilithium, SPHINCS+ | L | H | H | H | H |
| Lib6 | Commercial | Kyber, NTRU, Dilithium, Falcon, SPHINCS+ | H | H | M | L | H |

Some examples of the plurality of non-stringent requirement attributes are f1: Optimized implementations, f2: Security and compliance, f3: Documentation, f4: Regular Updates, f5: Community support, f6: Sample Testing, f7: Ease of implementation, and thereof. Classifying the plurality of application requirement attributes of each of the plurality of cryptographic applications into one of (a) the stringent requirement attribute and, (b) the non-stringent requirement attribute is straightforward. For example, whether the PQC library supports the Operating System (OS) and the programming language for application specific requirement. However, to meet some of the plurality of non-stringent requirement attributes of the cryptographic application multiple library features are needed to meet that requirement. For example: the non-stringent requirement attributes Re1, and Re2 of the plurality of cryptographic applications are shown Table. 8.

**Table. 8**

| Non-Stringent Requirement Attributes | Supported by Library Feature Attributes |
|---|---|
| Data Storage Timeline (Re1) | f1 - Optimized implementations, f2 - Security and compliance, f4 - Regular Updates, f5 - Community support |
| Migration Priority (Re2) | f1, f3, f5 |

The one or more candidate PQC libraries for the cryptographic application are obtained via step1, step2, step3, and step4. Step1: Eliminate the plurality of non-compatible PQC libraries for the plurality of stringent requirement attributes: In this step, for the cryptographic application, the plurality of PQC libraries which do not support (i.e. non-compatible) with the plurality of stringent requirement attributes like Supported Programming Languages, Supported Operating Systems are eliminated. The cryptographic Application 'A1' requires implementation in programming language - Java and operating system - macOS. The PQC Library 'Lib3' does not support implementation in 'Java' while the PQC library 'Lib6' does not support implementation in macOS, hence becomes non-compatible for the cryptographic Application A1. This is demonstrated with a scenario in Table. 9

**Table. 9**

| Application: "A1": Step 1 (Requirements: Programming language, Operating system) | |
|---|---|
| **Compatible PQC Library** | **Non-compatible PQC Library** |
| Lib1, Lib2, Lib4, Lib5 | Lib3, Lib6 |

In step 2, the plurality of PQC libraries is classified as the plurality of first preference based PQC libraries, and the plurality of second preference based PQC libraries for each non-stringent requirement attribute of the cryptographic application. For each non stringent requirement attribute of the cryptographic application and for each compatible PQC library obtained in step 1, the library utility value is computed. The library utility value for all the compatible PQC libraries library for the cryptographic Application A1 and Re2: "Migration Priority" is shown in the Table. 10.

**Table. 10**

| Application: "A1", and Non-stringent Requirement Attribute "Re2" | | | | |
|---|---|---|---|---|
| **PQC Library** | **Lib1** | **Lib2** | **Lib4** | Lib5 |
| **Library Utility Value** | -1.5 | 0 | 0 | -1 |

The library utility value for the non-stringent requirement attribute and for the PQC library depends on each of the plurality of compatible PQC libraries. The library utility value computation for Re2 and the PQC library Lib1 are demonstrated below.

For the non-stringent requirement attribute Re2,
for feature f1: util (App1.Re2, Lib1.f1) = (0.5-1.0) = (-0.5),
for feature f3: util (App1.Re2, Lib1.f3) = (0.5-1.0) = (-0.5),
for feature f5: util (App1.Re2, Lib1.f5) = (0.5-1.0) = (-0.5)

The library utility value for the PQC library is computed as: util (App1.Re2, Lib1) = (-0.5-0.5-0.5) = (-1.5). The plurality of PQC libraries having non-negative library utility value is considered as the first preference based PQC libraries as shown in Table. 11.

**Table. 11**

| Cryptographic Application: "A1": Step 2 | | |
|---|---|---|
| **Non-Stringent Requirement Attributes** | **First Preference Based PQC Libraries** | **Second Preference Based PQC Libraries** |
| Re1 | Lib1, Lib2, Lib4, Lib5 | - |
| Re2 | Lib2, Lib4 | Lib1, Lib5 |
| Re3, Re4, Re5 | Lib1, Lib2, Lib4, Lib5 | - |

Step 3: Classify the plurality of first compatible PQC libraries, the plurality of second compatible PQC libraries for each of the cryptographic application: For the cryptographic application, the PQC library is placed under the plurality of first compatible PQC libraries category if at least x% (e.g., 50%) of the plurality of non-stringent requirement attributes (in this example, $\lceil 5/2 \rceil = 3$), the PQC library is placed in the under the plurality of first compatible PQC libraries category for the cryptographic application, or else placed under the plurality of second compatible PQC libraries category. In this example all plurality of compatible PQC libraries for the cryptographic application A1 are placed in the plurality of first compatible PQC libraries category as shown in Table. 12.

**Table. 12**

| Cryptographic Application: "A1": Step 3 | |
|---|---|
| **First Compatible PQC Library** | **Second Compatible PQC Library** |
| Lib1, Lib2, Lib4, Lib5 | - |

Step 4: It must be ensured that each cryptographic application has close to 50% of the plurality of candidate PQC libraries in a candidate list. If more than x% (e.g., 50%) of the candidate PQC libraries are present in the plurality of first preference based PQC libraries, they are selected as the candidate PQC library of the one or more candidate PQC libraries for the cryptographic application. Step 1, step 2, step3, and step4 are repeated for all the cryptographic applications.

**Selection of plurality of optimal PQC schemes for each candidate PQC library:** For the cryptographic application and each of the plurality of cryptographic classical schemes in that cryptographic application, the optimal PQC scheme of the same category from each candidate PQC library is obtained by using LBM function. The plurality of performance objective metrics such as Execution Time, Memory usage, Computation Cost, Communication Cost values for the plurality of PQC Schemes under two PQC libraries Lib1 and Lib2 have been shown in Table 13 for the cryptographic application A1 and the classical cryptographic scheme RSA. The optimal PQC scheme for each candidate PQC library is highlighted in Table. 13.

**Table. 13**

| PQC Library | PQC Scheme | Execution Time | Memory Usage | Computati on Cost | Communicat ion Cost |
|---|---|---|---|---|---|
| Lib1 | Kyber768 | 91.08 | 22508.5 | 2050.11 | 22.13 |
| | McEliece-460896 | 24297.87 | 545921.5 | 13264727 | 1.77 |
| | FrodoKEM -976-AES | 1693.89 | 429160.9 | 726952 | 365.06 |
| | **Saber-KEM** | **65.54** | **28197.09** | **1847.98** | **19.91** |
| | NTRU-HPS-2048-677 | 7831.19 | 48529.78 | 380045.9 | 18.48 |
| Lib2 | **Kyber768** | **92.01** | **21908.55** | **2015.71** | **22.13** |
| | FrodoKEM -976-AES | 1639.72 | 425815.3 | 698216.1 | 365.06 |
| | Saber-KEM | 75.72 | 28108.37 | 2128.46 | 19.91 |
| | NTRU-HPS-2048-677 | 8828.91 | 42747.86 | 377417.2 | 18.48 |

Further, the LBM helps to select the best option in multi-objective optimization problems in linear time by handling trade-offs. An iteration of the LBM is shown below Table. 14 shows LBM score computation between two PQC schemes.

**Table. 14**

| Performance Objective Metric | Kyber768 ($obj_o^X$) | McEliece-460896 ($obj_o^Y$) | $\Delta$ ($|obj_o^X - obj_o^Y|$), **Values** | $\nabla(obj_o^X)$ **Values** |
|---|---|---|---|---|
| **Execution Time** | 91.08 | 24297.87 | 24206.8 | 91.08 |
| **Memory Usage** | 22508.5 | 545921.47 | 523413 | 22508.5 |
| **Computation Cost** | 2050.11 | 13264726.82 | 1.3E+07 | 2050.11 |
| **Communication Cost** | 22.12 | 1.77 | 20.36 | 22.12 |

X: Kyber768 (initial reference), Y: McEliece-460896

Steps for calculating $\partial$ (LBM Score):

Do: ∂=0+(1-24206.78/91.08) = -264.78
Do: ∂=-264.78+(1-"523412.97/22508.5) = -287.03
Do: ∂=-287.03+(1-13262676.71/2050.11) = -6755.28
Do: ∂=-6755.28+20.36/22.12= -6754.35
selection of option: Since ∂<0, X: Kyber768 remains the optimal PQC scheme.

The outcome of phase 1 is shortlisting of the optimal PQC scheme from each candidate PQC library. Table. 15 shows the plurality optimal PQC libraries for each candidate PQC library of the one or more candidate PQC libraries for the cryptographic Application (A1, RSA).

**Table. 15**

| PQC Library | PQC Scheme | Executi on Time | Memory Usage | Computati on Cost | Communicati on Cost |
|---|---|---|---|---|---|
| **Lib1** | **Saber-KEM** | **65.54** | **28197.1** | **1847.98** | **19.91** |
| Lib2 | Kyber768 | 92.01 | 21908.6 | 2015.71 | 22.13 |
| Lib4 | Kyber768 | 82.71 | 22693.2 | 1876.96 | 22.13 |
| Lib5 | Kyber768 | 75.42 | 23312.8 | 1758.14 | 22.13 |

Now, the scheme-library pair comprising the final optimal PQC scheme and the candidate PQC library from among the plurality optimal PQC libraries is selected for each candidate PQC library of the one or more candidate PQC libraries. Using LBM method, each optimal PQC scheme is compared in an iterative way and the scheme-library pair is identified as shown in Table. 16. For the cryptographic application (A1, RSA), the selected scheme-library pair is (Lib 1, Saber-KEM). This is repeated for the plurality of cryptographic applications and the plurality classical cryptographic schemes in each of the plurality of cryptographic application.

**Table. 16**

| Cryptographic Application | Classical Cryptographic scheme | PQC Library | PQC Scheme |
|---|---|---|---|
| **A1** | **RSA** | **Lib1** | **Saber-KEM** |
| A1 | ECDSA | Lib5 | Dilithium2 |
| A2 | RSA | Lib2 | Kyber512 |
| A2 | ECDSA | Lib3 | Dilithium2 |
| A3 | ECDSA | Lib3 | Dilithium2 |
| A4 | ECDSA | Lib3 | Dilithium2 |
| A5 | RSA | Lib3 | FireSaber-KEM |

**Obtaining final candidate PQC libraries, using the scheme-library pair for each the plurality of classical cryptographic schemes of the plurality of cryptographic applications:** The minimum number of PQC libraries in the final list taken as input from the user. The minimum PQC library is considered as 3. The versatility count is computed for each of the candidate PQC library of the one or more candidate PQC libraries. This is done by selecting the plurality of classical cryptographic schemes mapped to that candidate PQC library. The top 3 PQC libraries selected based on the versatility scores are selected. In this case, the minimal set of libraries include Lib3, Lib1, Lib2. Lib5 is not selected as it is commercial and has a higher cost of purchase and maintenance as shown in Table. 17.

**Table. 17**

| PQC Library | Lib3 | Lib1 | Lib2 | Lib5 |
|---|---|---|---|---|
| Versatility Count | 4 | 1 | 1 | 1 |

There can be one or more cryptographic classical schemes which are currently mapped to other PQC libraries not included in the one or more final candidate PQC libraries. In this example (A1, ECDSA, Lib5, Dilithium 2) needs to be migrated to one or more final candidate PQC libraries in Lib1, Lib2, Lib4. Since Lib4 does not contain any PQC scheme to replace the current allocation of (A1, ECDSA), the possible migration options are: (Lib1, Dilithium2) and (Lib2, Dilithium2). By applying LBM, (Lib1, Dilithium2) is selected and, hence post migration the new mapping becomes (A1, ECDSA, Lib1, Dilithium2). Table. 18 and Table. 19 shows the final recommendation for the plurality of cryptographic applications with the plurality of performance objective values.

There can be one or more cryptographic classical schemes which are currently mapped to other PQC libraries not included in the one or more final candidate PQC libraries. In this example (A1, ECDSA, Lib5, Dilithium 2) needs to be migrated to one or more final candidate PQC libraries in Lib1, Lib2, Lib4. Since Lib4 does not contain any PQC scheme to replace the current allocation of (A1, ECDSA), the possible migration options are: (Lib1, Dilithium2) and (Lib2, Dilithium2). By applying LBM, (Lib1, Dilithium2) is selected and, hence post migration the new mapping becomes (A1, ECDSA, Lib1, Dilithium2). Table. 18 and Table. 19 shows the final recommendation for the plurality of cryptographic applications with the plurality of performance objective values.

| Final Recommendation | | | | | |
|---|---|---|---|---|---|
| Cryptographic Application | Classical Cryptographic Scheme | PQC Library | PQC Scheme | Execution Time | Memory Usage |
| A1 | ECDSA | Lib1 | Dilithium2 | 237.53 | 44816.9 |
| A1 | ECDSA | Lib2 | Dilithium2 | 267.99 | 48099.6 |
| A1 | RSA | Lib1 | Saber-KEM | 65.54 | 28197.1 |

| A2 | RSA | Lib2 | Kyber512 | 9.62 | 3148.3 |
| A2 | ECDSA | Lib3 | Dilithium2 | 24.93 | 4932.1 |
| A3 | ECDSA | Lib3 | Dilithium2 | 99.93 | 19672.5 |
| A4 | ECDSA | Lib3 | Dilithium2 | 82.5 | 16246.9 |
| A5 | RSA | Lib3 | FireSaber-KEM | 45.74 | 33046.4 |

**Table. 18**

| Final Recommendation | | | | | |
|---|---|---|---|---|---|
| Cryptographic Application | Classical Cryptographic Scheme | PQC Library | PQC Scheme | Computation Cost | Communication Cost |
| A1 | ECDSA | Lib1 | Dilithium2 | 10645.15 | 29.17 |
| A1 | ECDSA | Lib2 | Dilithium2 | 12890.37 | 29.17 |
| A1 | RSA | Lib1 | Saber-KEM | 1847.98 | 19.91 |
| A2 | RSA | Lib2 | Kyber512 | 30.27 | 2.87 |

| A2 | ECDSA | Lib3 | Dilithium2 | 122.94 | 3.85 |
| A3 | ECDSA | Lib3 | Dilithium2 | 1965.92 | 13.98 |
| A4 | ECDSA | Lib3 | Dilithium2 | 1340.395 | 11.63 |
| A5 | RSA | Lib3 | FireSaber-KEM | 1511.58 | 25.53 |

**Table. 19**

Conventionally, systems did not explicitly consider the problem of the PQC scheme and PQC library selection and recommendation. Hence a naive library and scheme selection strategy was designed as a benchmark to compare the disclosed invention. A minimal set of PQC libraries comprising one or more final candidate PQC libraries is recommended by the disclosed method is also used as a search space for the naive library and scheme selection strategy to minimize differences due to initial selection of the PQC libraries. In the naive library and scheme selection strategy, the plurality of compatible PQC libraries for each of the plurality of cryptographic applications are filtered, followed by selection of the PQC libraries and the plurality of PQC schemes from the plurality of compatible PQC libraries. The naive library and scheme selection strategy had two cases. The set of (PQC library, PQC scheme) selected for (cryptographic application, classical cryptographic scheme) are such that in Case 1: execution time is minimal, Case 2: memory is minimal. Every scheme of the naive library and scheme selection strategy was of the highest application security requirement. The plurality of performance objective metrics of the disclosed method was compared with the naive library and scheme selection strategy (which performs best in terms of any one performance objective metric). The procedure for the naive library and scheme selection strategy for selection of PQC Library and PQC Scheme is provided as follows:

Obtain the one or more final candidate PQC libraries from the disclosed invention: *FinalLib;*
For each cryptographic application ($A_i$), list compatible PQC libraries: $A_i.CompLib;$
For each application ($A_i$), obtain candidate list of PQC libraries ($A_i.CandLib$):
$A_i.CandLib = FinalLib \cap A_i.CompLib$
For each cryptographic application ($A_i$):

Consider only PQC schemes with the highest security level for each of the PQC library in $A_i.CandLib$
For each of the classical cryptographic scheme ($A_i.CS_l$)

Obtain cryptographic operations of $A_i.CS_l$

Case 1: Select a PQC ( $pqc_j^{exec}$ ) of the same cryptographic operations and the PQC library ($l_{k1}$) such that execution time is minimum;

Case 2: Select a PQC ( $pqc_j^{mem}$ ) of the same cryptographic operations and the PQC library ($l_{k2}$) such that memory usage is minimum

Compute value of the performance objective metric for ( $A_i.CS_l, l_{k1}.pqc_j^{exec}$ )

Compute value of the performance objective metric for ( $A_i.CS_l, l_{k2}.pqc_j^{mem}$ )

**Experiment inputs:** 20 cryptographic applications {A1, A2, ..., A20} are considered and available (30) PQC libraries. The 30 PQC libraries are: [L1, L2, ..., L30]. The one or more final candidate PQC libraries recommended by the disclosed invention are: FinalLib= [L14, L12, L22, L19]. These one or more final candidate PQC libraries are used as an input for naive library and scheme selection strategy.

**Experiment 1:** To compare total values of the plurality performance objective metrics between the disclosed invention and the naive library and scheme selection strategy. The method of the present disclosure was compared to the naive library and scheme selection strategy to compute the percentage improvement in sum of plurality of performance objective values for 20 cryptographic applications. A Multi-Criteria Decision-Making (MCDM) score is also introduced.

$$MCDM = 0.25 * Execution\ Time + 0.25 * Memory\ Usage + 0.25$$
$$* Computation\ Cost + 0.25 * Communication\ Cost$$

In case 1 of naive library and scheme selection strategy, the naive library and scheme selection strategy selects the plurality of PQC schemes and one or more PQC libraries with minimum execution time and highest security level, and in case 2 of the naive library and scheme selection strategy, the naive library and scheme selection strategy selects the plurality of PQC schemes and the one or more PQC libraries with minimum memory usage and highest security level. It is observed that in case 2, the naive library and scheme selection strategy perform better for memory. But for the other plurality of performance objective metrics and for the MCDM the disclosed method performs better. Hence, the method of the present disclosure performs multi-objective optimization to give better performance than the naive library and scheme selection strategy considering the plurality performance objective metrics as shown in Table. 20.

**Table. 20**

| Naive Library And Scheme Selection Strategy | Improvement (%) in plurality performance objective metrics across 20 Application by the disclosed invention | | | | |
|---|---|---|---|---|---|
| | Execution Time | Memory Usage | Computation Cost | Communication Cost | MCDM |
| Case 1 | 13% | 34% | 50% | 53% | **37%** |
| Case 2 | 100% | -26% | 62% | 100% | **59%** |

**Experiment 2: To compute the average percentage of applications for which our inventive method performed better than the naive library and scheme selection strategy considering the plurality of performance objective metrics.** The percentage of cryptographic applications (among 20 applications) for which the disclosed method performed better than the two cases of the naive library and scheme selection strategy is computed. This comparison was performed across the plurality of performance objective metrics: execution time, memory usage, communication cost and computation cost, and MCDM. Also, the experiment was repeated for Case 1 and Case 2 of the naive library and scheme selection strategy to show the variation in performance of the naive library and scheme selection strategy. It is observed that the disclosed method performs better for most (over 50%) applications compared to both cases (Case 1 and Case 2) of naive library and scheme selection strategy for the plurality of performance objective metric values despite each case of the naive library and scheme selection strategy selecting the one or more PQC libraries and the plurality of PQC schemes with minimum value for one performance objective metric shown in Table. 21. The multi-objective optimization by the LBM used in the disclosed invention helps it to perform better than the naive library and scheme selection strategy.

**Table. 21**

| Performance Objective Metrics | Case 1: Minimum Time | | | Case 2: Minimum Memory | | |
|---|---|---|---|---|---|---|
| | **Better** | **Same** | **Worse** | **Better** | **Same** | **Worse** |
| Execution Time | 60 | 25 | 15 | 100 | 25 | 15 |
| Memory Usage | 75 | 25 | 0 | 75 | 25 | 0 |
| Computation Cost | 70 | 25 | 5 | 70 | 25 | 5 |
| Communication Cost | 70 | 30 | 0 | 70 | 30 | 0 |
| **Average** | **68.75** | **26.25** | **5** | **78.75** | **26.25** | **5** |

Experiment 3: To demonstrate the comparison in performance between the disclosed invention and case 1 of the naive library and scheme selection strategy for 20 cryptographic applications across the plurality performance objective metrics. Table. 22A, 22B, 22C, and 22D demonstrates comparison of the plurality of performance objective metrics between the method of the present disclosure and case 1 of the naive library and scheme selection strategy for each of the cryptographic applications. For execution time: the disclosed invention performs better for 60% of the cryptographic applications, for memory usage: the disclosed invention performs better for 75% of the cryptographic applications, for both computation cost and communication cost: the disclosed invention performs better for 70% of the cryptographic applications.

**Table. 22A**

| Cryptographic Application | Disclosed Method | Naive: Case 1 | Method of the present disclosure performed better. Yes:1, No:0, Same: - |
|---|---|---|---|
| | Obj: Execution Time | | |
| A1 | 552.99 | 742.34 | 1 |
| A2 | 50.24 | 70.85 | 1 |
| A3 | 100.3 | 196.98 | 1 |
| ...... | ....... | ..... | ...... |
| A19 | 575.32 | 559.96 | 0 |
| A20 | 122.15 | 152.04 | 1 |
| | | Total | 12 (60%) |

**Table. 22B**

| Application | Disclosed Method | Naive: Case 1 | Method of the present disclosure performed better. Yes:1, No:0, Same: - |
|---|---|---|---|
| | Obj: Memory Usage | | |
| A1 | 63866.58 | 133086 | 1 |
| A2 | 8239.5 | 19407.43 | 1 |
| A3 | 19907.89 | 47397.61 | 1 |
| ...... | ........ | ........ | ....... |
| A19 | 72890.35 | 73040.35 | 1 |
| A20 | 34537.5 | 54199.3 | 1 |
| | | Total | 15 (75%) |

**Table. 22C**

| Application | Disclosed Method | Naive: Case 1 | Method of the present disclosure performed better. Yes:1, No:0, Same: - |
|---|---|---|---|
| | Obj: Computation Cost | | |
| A1 | 12603.05 | 45651.6 | 1 |
| A2 | 156.96 | 641.73 | 1 |
| A3 | 1965.95 | 9250.44 | 1 |
| ...... | ....... | ...... | ...... |
| A19 | 20656.82 | 20685.8 | 1 |
| A20 | 2169.15 | 3758.83 | 1 |
| | | Total | 14 (70%) |

**Table. 22D**

| Application | Disclosed Method | Naive: Case 1 | Method of the present disclosure performed better. Yes:1, No:0, Same: - |
|---|---|---|---|
| | Obj: Communication Cost | | |
| A1 | 485.79 | 967.32 | 1 |
| A2 | 6.72 | 772.67 | 1 |
| A3 | 14 | 260.15 | 1 |

(continued)

| Application | Disclosed Method | Naive: Case 1 | Method of the present disclosure performed better. Yes:1, No:0, Same: - |
|---|---|---|---|
| | **Obj: Communication Cost** | | |
| ...... | ........ | ........ | ....... |
| A19 | 57.23 | 57.23 | - |
| A20 | 27.54 | 44.36 | 1 |
| | | **Total** | **14 (70%)** |

Experiment 4: To demonstrate the performance comparison between the method of the present disclosure and the naive library and scheme selection strategy across the plurality performance objective metrics for any two cryptographic applications. Two cryptographic applications, A7 and A14 were considered. The performance between the method of the present disclosure and both cases of the naive library and scheme selection strategy for both cryptographic applications are compared. It was shown that the disclosed invention performs better than the plurality performance objective metrics and for MCDM in both cases (case 1 and case 2) for both the cryptographic applications. Even if the case 2 of the naive library and scheme selection strategy performs better in terms of memory usage as it selected the one or more PQC libraries and the plurality of schemes with minimum memory usage, the overall performance of the method of the present disclosure is better. A comparative performance analysis between the naive library and scheme selection strategy and the disclosed invention for multiple cryptographic Applications is shown in Table. 23

**Table. 23**

| % Improvement in performance objective using Disclosed method over Naive Library And Scheme Selection Strategy | | | | | |
|---|---|---|---|---|---|
| Naive Library And Scheme Selection Strategy | Execution Time | Memory Usage | Computation Cost | Communication Cost | MCDM |
| **Case** | **Application: A7** | | | | |
| 1 | -6.18 | 58.1 | 44.05 | 98.25 | 48.55 |
| 2 | 40.03 | 52.99 | 76.18 | 98.26 | 56.86 |
| **Application: A14** | | | | | |
| 1 | 5.21 | 50.39 | 68.41 | 53.97 | 44.5 |
| 2 | 99.75 | -37.27 | 99.93 | 89.8 | 38.12 |

**Conclusion:** The performance of the method of the present disclosure with two cases of the naive library and scheme selection strategy is compared. It is found that the method of the present disclosure performs better than both cases despite the naive library and scheme selection strategy selecting the one or more PQC libraries and the plurality of PQC schemes with (i) minimum execution time in case 1, and (ii) minimum memory usage in case 2. Hence, it can be concluded that any of the naive library and scheme selection strategy which selects the plurality of PQC schemes such that security level is the highest (to ensure security criteria satisfaction) and best in terms of one performance objective metric cannot find the optimal solution. This is achieved by the method of the present disclosure which helps in PQC library selection and PQC scheme selection by security level filtering, two-phase comparison and the LBM.

Computation Complexity: There are $|A|=20$ cryptographic applications, $|L|=30$ PQC libraries. Each cryptographic application has $|C|=2$ classical cryptographic schemes and each PQC library has $|P|=5$ PQC schemes. The minimal number of PQC libraries is $|liblim|=4$. By brute-force method, the total number of combinations is $(L|*|P|)^{((|A|*|C|))}= (150)^{40}$. Hence, comparing all possible combinations becomes infeasible. The method of the present disclosure helps to reduce complexity and still obtain optimal solutions.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the problem of selecting the one or more final candidate PQC libraries and the plurality of optimal PQC schemes of each of the plurality of classical cryptographic schemes associated with each of the plurality of cryptographic applications. The method first generates one or more candidate PQC libraries, for each of the plurality of cryptographic applications based on the plurality of stringent requirement attributes and the plurality of non-stringent requirement attributes, using the plurality of first compatible PQC libraries, and the plurality of second compatible PQC libraries. Further the scheme-library pair of the one or more candidate PQC libraries and PQC schemes is obtained, for each the plurality of classical cryptographic schemes based on the plurality of performance objective metrics. Then one or more final candidate PQC libraries obtained using the versatility count of one or more candidate PQC libraries associated with the scheme-library pair is recommended for the plurality of cryptographic applications of the enterprise.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), the method comprising:

   receiving (302), via one or more hardware processors, a plurality of cryptographic applications pertaining to an enterprise, a plurality of classical cryptographic schemes associated with each of the plurality of cryptographic applications, a plurality of frequencies of a plurality of cryptographic operations associated with each classical cryptographic scheme of the plurality of classical cryptographic schemes, a plurality of Post Quantum Cryptography (PQC) libraries, a plurality of library feature attributes associated with the plurality of PQC libraries, a plurality of application requirement attributes, a plurality of mappings between the plurality of library feature attributes and the plurality of application requirement attributes, a plurality of application requirement attribute types associated with the plurality of cryptographic applications, a plurality of performance objective metrics associated with the plurality of cryptographic applications, and a plurality of application security requirements associated with the plurality of cryptographic applications;

classifying (304), via the one or more hardware processors, the plurality of application requirement attributes of each of the cryptographic application of the plurality of cryptographic applications into one of (a) a stringent requirement attribute and, (b) a non-stringent requirement attribute, to obtain a plurality of stringent requirement attributes, and a plurality of non-stringent requirement attributes, based on the plurality of application requirement attribute types;

obtaining (306), via the one or more hardware processors, (i) a plurality of compatible PQC libraries, and a plurality of non-compatible PQC libraries for each of the plurality of cryptographic applications based on the generated plurality of stringent requirement attributes, (ii) a plurality of first preference based PQC libraries, and a plurality of second preference based PQC libraries for each of the plurality of cryptographic applications based on the plurality of non-stringent requirement attributes and the plurality of library feature attributes, and (iii) a plurality of first compatible PQC libraries, and a plurality of second compatible PQC libraries of the plurality of cryptographic applications based on the plurality of non-stringent requirement attributes;

obtaining (308), via the one or more hardware processors, one or more candidate PQC libraries, for each of the plurality of cryptographic applications using the plurality of first compatible PQC libraries, and the plurality of second compatible PQC libraries;

selecting (310), via the one or more hardware processors, a plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements;

obtaining (312), via the one or more hardware processors, a scheme-library pair comprising a final optimal PQC scheme and a candidate PQC library of the one or more candidate PQC libraries, for each the plurality of classical cryptographic schemes associated with each of the plurality of cryptographic applications;

obtaining (314), via the one or more hardware processors, a one or more final candidate PQC libraries of the one or more candidate PQC libraries, using the scheme-library pair for each the plurality of classical cryptographic schemes of the plurality of cryptographic applications; and

recommending (316), via the one or more hardware processors, the obtained one or more final candidate PQC libraries of the one or more candidate PQC libraries for the plurality of cryptographic applications of the enterprise.

2. The processor implemented method as claimed in claim 1, wherein the steps for obtaining the plurality of compatible PQC libraries, and the plurality of non-compatible PQC libraries for each of the plurality of cryptographic applications for the generated plurality of stringent requirement attributes comprises:

computing a compatibility score of a cryptographic application of the plurality of cryptographic applications with each of the plurality of PQC libraries for the generated plurality of stringent attributes;

identifying the plurality of non-compatible PQC libraries of the plurality of PQC libraries, based on the compatibility score; and

eliminating the identified plurality of non-compatible PQC libraries from the plurality of PQC libraries, to obtain the plurality of compatible PQC libraries;

wherein the steps for obtaining the plurality of first preference based PQC libraries, and the plurality of second preference based PQC libraries for each of the plurality of classical cryptographic applications for the plurality of non-stringent requirement attributes comprises:

computing a library utility value of the cryptographic application with each of the plurality of compatible PQC libraries for the generated plurality of non-stringent attributes; and

obtaining the plurality of first preference based PQC libraries, and the plurality of second preference based preferred PQC libraries of the cryptographic application based on the library utility value, the plurality of library feature attributes, and the plurality of mapping between a plurality of library feature attributes and the plurality of application requirement attributes, wherein if the library utility value is greater than or equal to zero the corresponding plurality of compatible PQC libraries are categorized as the plurality of first preference based PQC libraries; and wherein if the library utility value is less than zero the corresponding plurality of compatible PQC libraries are categorized as the plurality of second preference based PQC libraries; and

wherein the steps for generating the plurality of first compatible PQC libraries, and the plurality of second compatible PQC libraries of the cryptographic application based on the plurality of first preference based PQC libraries, and the plurality of second preference based PQC libraries for the non-stringent requirement attributes comprises:

counting a total number of the plurality of non-stringent requirement attributes of the cryptographic application, to generate a non-stringent attribute count; and

checking for each first preference based PQC library of the plurality of first preference based PQC libraries if the plurality of non-stringent requirement attributes of the cryptographic application is greater than a predefined percentage of the non-stringent attribute count, wherein if the plurality of non-stringent requirement attributes of the cryptographic application is greater than a predefined percentage of the non-stringent attribute count the associated first preference based PQC library is categorized as a first compatible PQC library of the plurality of compatible PQC libraries, else categorized as a second compatible PQC library of the plurality of second compatible PQC libraries.

3. The processor implemented method as claimed in claim 1, wherein the steps for obtaining the one or more candidate PQC libraries, for each of the plurality of cryptographic applications using the plurality of first compatible PQC libraries, and the plurality of second compatible PQC libraries comprises:

checking if the cryptographic application having more than a predefined number of the plurality of first compatible PQC libraries, wherein upon successful checking the plurality of first compatible PQC libraries forms the one or more candidate PQC libraries, and wherein if the cryptographic application have less than the predefined number of the plurality of first compatible PQC libraries then a predefined percentage of the plurality of second compatible PQC libraries are added to make up the one or more candidate PQC libraries, and wherein each of the one or more candidate PQC libraries comprises a plurality of PQC schemes.

4. The processor implemented method as claimed in claim 1, wherein the steps for selection of plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements comprises:

receiving the plurality of classical cryptographic schemes, and the plurality of PQC schemes for each of the one or more candidate PQC libraries of the cryptographic application;

filtering the plurality of PQC schemes based on an application security requirement of the plurality of application security requirements for each of the one or more candidate PQC libraries of the cryptographic application, to generate a plurality of security filtered PQC schemes;

computing the plurality of performance objective metrics using the plurality frequencies of the plurality of cryptographic operations associated for each of the plurality of security filtered PQC schemes of each of the one or more candidate PQC libraries; and

selecting the plurality of optimal PQC schemes from the plurality of security filtered PQC schemes for the plurality of classical cryptographic schemes associated with each of the plurality of cryptographic applications using a Lowest Bound Maximiser (LBM) based on the plurality of performance objective metrics;

5. The processor implemented method as claimed in claim 4, wherein selecting the plurality of optimal PQC schemes using the LBM based on the plurality of performance objective metrics comprises:

receiving the plurality of security filtered PQC schemes, wherein a first security filtered PQC scheme of the plurality of security filtered PQC schemes is labelled as a best security filtered PQC scheme; and

iteratively comparing the best security filtered PQC scheme with a next security filtered PQC scheme of the plurality of security filtered PQC schemes based on the plurality of performance objective metrics using the LBM, to generate an LBM score, wherein if the LBM score is less than zero, the best security filtered PQC scheme is retained and compared with next security filtered PQC scheme, wherein if the LBM score is greater than or equal to zero , the next security filtered PQC scheme becomes the best security filtered PQC scheme and compared with the next scheme.

6. The processor implemented method as claimed in claim 1, wherein obtaining the scheme-library pair comprising the final optimal PQC scheme and the candidate PQC library of the one or more candidate PQC libraries, for each the plurality of classical cryptographic schemes associated with each of the plurality of cryptographic applications comprises:

computing the LBM score for the plurality of optimal PQC schemes; and

obtaining the scheme-library pair comprising the final optimal PQC scheme and the candidate PQC library of the one or more candidate PQC libraries, by comparing each of the plurality of optimal PQC schemes among the plurality of optimal PQC schemes for each of the candidate PQC library of the one or more candidate PQC libraries based on the computed LBM score.

7. The processor implemented method as claimed in claim 1, wherein steps for obtaining the one or more final candidate PQC libraries of the one or more candidate PQC libraries, using the scheme-library pair for each the plurality of classical cryptographic schemes of the plurality of cryptographic applications comprises:

compute a versatility count of the candidate PQC library of the one or more candidate PQC libraries by: obtaining the versatility count of the plurality of classical cryptographic schemes associated with each of the plurality of cryptographic applications that are mapped to each of the candidate PQC library of the one or more of PQC libraries;

obtaining the one or more final candidate PQC libraries of the one or more of PQC libraries based on the versatility count, wherein a plurality of remaining PQC libraries of the plurality of PQC libraries are listed as a plurality of forbidden PQC libraries;

obtaining the plurality of classical cryptographic schemes associated with each of the plurality of cryptographic applications that are mapped to the plurality of forbidden PQC libraries;

obtaining the plurality of PQC schemes of the plurality of forbidden PQC libraries mapped to the plurality of classical cryptographic schemes associated with each of the plurality of cryptographic applications; and

obtaining the one or more final candidate PQC libraries which contain the plurality of PQC schemes from the plurality of forbidden PQC libraries, wherein if at least one final candidate PQC library of the one or more final candidate PQC libraries are obtained then select the scheme-library pair by the LBM, and wherein if the one or more final candidate PQC libraries is empty then the plurality of forbidden PQC libraries are added to the one or more final candidate PQC libraries.

8. A system (100), comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

receive a plurality of cryptographic applications pertaining to an enterprise, a plurality of classical cryptographic schemes associated with each of the plurality of cryptographic applications, a plurality of frequencies of a plurality of cryptographic operations associated with each classical cryptographic scheme of the plurality of classical cryptographic schemes, a plurality of Post Quantum Cryptography (PQC) libraries, a plurality of library feature attributes associated with the plurality of PQC libraries, a plurality of application requirement attributes, a plurality of mappings between the plurality of library feature attributes and the plurality of application requirement attributes, a plurality of application requirement attribute types associated with the plurality of cryptographic applications, a plurality of performance objective metrics associated with the plurality of cryptographic applications, and a plurality of application security requirements associated with the plurality of cryptographic applications;

classify the plurality of application requirement attributes of each of the cryptographic application of the plurality of cryptographic applications into one of (a) a stringent requirement attribute and, (b) a non-stringent requirement attribute, to obtain a plurality of stringent requirement attributes, and a plurality of non-stringent requirement attributes, based on the plurality of application requirement attribute types;

obtain (i) a plurality of compatible PQC libraries, and a plurality of non-compatible PQC libraries for each of the plurality of cryptographic applications based on the generated plurality of stringent requirement attributes, (ii) a plurality of first preference based PQC libraries, and a plurality of second preference based PQC libraries for each of the plurality of cryptographic applications based on the plurality of non-stringent requirement attributes and the plurality of library feature attributes, and (iii) a plurality of first compatible PQC libraries, and a plurality of second compatible PQC libraries of the plurality of cryptographic applications based on the plurality of non-stringent requirement attributes;

obtain one or more candidate PQC libraries, for each of the plurality of cryptographic applications using the plurality of first compatible PQC libraries, and the plurality of second compatible PQC libraries;

select a plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements;

obtaining a scheme-library pair comprising a final optimal PQC scheme and a candidate PQC library of the one or more candidate PQC libraries, for each the plurality of classical cryptographic schemes associated with each of the plurality of cryptographic applications;

obtain a one or more final candidate PQC libraries of the one or more candidate PQC libraries, using the scheme-library pair for each the plurality of classical cryptographic schemes of the plurality of cryptographic applications; and

recommend the obtained one or more final candidate PQC libraries of the one or more candidate PQC libraries for the plurality of cryptographic applications of the enterprise.

9. The system as claimed in claim 8, wherein the steps for obtaining the plurality of compatible PQC libraries, and the plurality of non-compatible PQC libraries for each of the plurality of cryptographic applications for the generated plurality of stringent requirement attributes comprises:

computing a compatibility score of a cryptographic application of the plurality of cryptographic applications with each of the plurality of PQC libraries for the generated plurality of stringent attributes;

identifying the plurality of non-compatible PQC libraries of the plurality of PQC libraries, based on the compatibility score; and

eliminating the identified plurality of non-compatible PQC libraries from the plurality of PQC libraries, to obtain the plurality of compatible PQC libraries;

wherein the steps for obtaining the plurality of first preference based PQC libraries, and the plurality of second preference based PQC libraries for each of the plurality of classical cryptographic applications for the plurality of non-stringent requirement attributes comprises:

computing a library utility value of the cryptographic application with each of the plurality of compatible PQC libraries for the generated plurality of non-stringent attributes; and

obtaining the plurality of first preference based PQC libraries, and the plurality of second preference based preferred PQC libraries of the cryptographic application based on the library utility value, the plurality of library feature attributes, and the plurality of mapping between a plurality of library feature attributes and the plurality of application requirement attributes, wherein if the library utility value is greater than or equal to zero the corresponding plurality of compatible PQC libraries are categorized as the plurality of first preference based PQC libraries; and wherein if the library utility value is less than zero the corresponding plurality of compatible PQC libraries are categorized as the plurality of second preference based PQC libraries; and

wherein the steps for generating the plurality of first compatible PQC libraries, and the plurality of second compatible PQC libraries of the cryptographic application based on the plurality of first preference based PQC libraries, and the plurality of second preference based PQC libraries for the non-stringent requirement attributes comprises:

counting a total number of the plurality of non-stringent requirement attributes of the cryptographic application, to generate a non-stringent attribute count; and

checking for each first preference based PQC library of the plurality of first preference based PQC libraries if the plurality of non-stringent requirement attributes of the cryptographic application is greater than a predefined percentage of the non-stringent attribute count, wherein if the plurality of non-stringent requirement attributes of the cryptographic application is greater than a predefined percentage of the non-stringent attribute count the associated first preference based PQC library is categorized as a first compatible PQC library of the plurality of compatible PQC libraries, else categorized as a second compatible PQC library of the plurality of second compatible PQC libraries.

10. The system as claimed in claim 8, wherein the steps for obtaining the one or more candidate PQC libraries, for each of the plurality of cryptographic applications using the plurality of first compatible PQC libraries, and the plurality of second compatible PQC libraries comprises:

checking if the cryptographic application having more than a predefined number of the plurality of first compatible PQC libraries, wherein upon successful checking the plurality of first compatible PQC libraries forms the one or more candidate PQC libraries, and wherein if the cryptographic application have less than the predefined number of the plurality of first compatible PQC libraries then a predefined percentage of the plurality of second compatible PQC libraries are added to make up the one or more candidate PQC libraries, and wherein each of the one or more candidate PQC libraries comprises a plurality of PQC schemes.

11. The system as claimed in claim 8, wherein the steps for selection of plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements comprises:

receiving the plurality of classical cryptographic schemes, and the plurality of PQC schemes for each of the one or more candidate PQC libraries of the cryptographic application;
filtering the plurality of PQC schemes based on an application security requirement of the plurality of application security requirements for each of the one or more candidate PQC libraries of the cryptographic application, to generate a plurality of security filtered PQC schemes;
computing the plurality of performance objective metrics using the plurality frequencies of the plurality of cryptographic operations associated for each of the plurality of security filtered PQC schemes of each of the one or more candidate PQC libraries; and
selecting the plurality of optimal PQC schemes from the plurality of security filtered PQC schemes for the plurality of classical cryptographic schemes associated with each of the plurality of cryptographic applications using a Lowest Bound Maximiser (LBM) based on the plurality of performance objective metrics.

12. The system as claimed in claim 11, wherein selecting the plurality of optimal PQC schemes using the LBM based on the plurality of performance objective metrics comprises:

receiving the plurality of security filtered PQC schemes, wherein a first security filtered PQC scheme of the plurality of security filtered PQC schemes is labelled as a best security filtered PQC scheme; and
iteratively comparing the best security filtered PQC scheme with a next security filtered PQC scheme of the plurality of security filtered PQC schemes based on the plurality of performance objective metrics using the LBM, to generate an LBM score, wherein if the LBM score is less than zero, the best security filtered PQC scheme is retained and compared with next security filtered PQC scheme, wherein if the LBM score is greater than or equal to zero , the next security filtered PQC scheme becomes the best security filtered PQC scheme and compared with the next scheme.

13. The system as claimed in claim 8, wherein obtaining the scheme-library pair comprising the final optimal PQC scheme and the candidate PQC library of the one or more candidate PQC libraries, for each the plurality of classical cryptographic schemes associated with each of the plurality of cryptographic applications comprises:

computing the LBM score for the plurality of optimal PQC schemes; and
obtaining the scheme-library pair comprising the final optimal PQC scheme and the candidate PQC library of the one or more candidate PQC libraries, by comparing each of the plurality of optimal PQC schemes among the plurality of optimal PQC schemes for each of the candidate PQC library of the one or more candidate PQC libraries based on the computed LBM score.

14. The system as claimed in claim 8, wherein steps for obtaining the one or more final candidate PQC libraries of the one or more candidate PQC libraries, using the scheme-library pair for each the plurality of classical cryptographic schemes of the plurality of cryptographic applications comprises:

compute a versatility count of the candidate PQC library of the one or more candidate PQC libraries by:
obtaining the versatility count of the plurality of classical cryptographic schemes associated with each of the plurality of cryptographic applications that are mapped to each of the candidate PQC library of the one or more of PQC libraries
obtaining the one or more final candidate PQC libraries of the one or more of PQC libraries based on the versatility count, wherein a plurality of remaining PQC libraries of the plurality of PQC libraries are listed as a plurality of forbidden PQC libraries.
obtaining the plurality of classical cryptographic schemes associated with each of the plurality of cryptographic applications that are mapped to the plurality of forbidden PQC libraries;
obtaining the plurality of PQC schemes of the plurality of forbidden PQC libraries mapped to the plurality of classical cryptographic schemes associated with each of the plurality of cryptographic applications; and
obtaining the one or more final candidate PQC libraries which contain the plurality of PQC schemes from the plurality of forbidden PQC libraries, wherein if at least one final candidate PQC library of the one or more final candidate PQC libraries are obtained then select the scheme-library pair by the LBM, and wherein if the one or more final candidate PQC libraries is empty then the plurality of forbidden PQC libraries are added to the one or more final candidate PQC libraries.

15. One or more non-transitory machine-readable information storage mediums comprising one or more instructions which when executed by one or more hardware processors cause:

receiving a plurality of cryptographic applications pertaining to an enterprise, a plurality of classical cryptographic schemes associated with each of the plurality of cryptographic applications, a plurality of frequencies of a plurality of cryptographic operations associated with each classical cryptographic scheme of the plurality of classical cryptographic schemes, a plurality of Post Quantum Cryptography (PQC) libraries, a plurality of library feature attributes associated with the plurality of PQC libraries, a plurality of application requirement attributes, a plurality of mappings between the plurality of library feature attributes and the plurality of application requirement attributes, a plurality of application requirement attribute types associated with the plurality of cryptographic applications, a plurality of performance objective metrics associated with the plurality of cryptographic applications, and a plurality of application security requirements associated with the plurality of cryptographic applications;

classifying the plurality of application requirement attributes of each of the cryptographic application of the plurality of cryptographic applications into one of (a) a stringent requirement attribute and, (b) a non-stringent requirement attribute, to obtain a plurality of stringent requirement attributes, and a plurality of non-stringent requirement attributes, based on the plurality of application requirement attribute types;

obtaining (i) a plurality of compatible PQC libraries, and a plurality of non-compatible PQC libraries for each of the plurality of cryptographic applications based on the generated plurality of stringent requirement attributes, (ii) a plurality of first preference based PQC libraries, and a plurality of second preference based PQC libraries for each of the plurality of cryptographic applications based on the plurality of non-stringent requirement attributes and the plurality of library feature attributes, and (iii) a plurality of first compatible PQC libraries, and a plurality of second compatible PQC libraries of the plurality of cryptographic applications based on the plurality of non-stringent requirement attributes;

obtaining one or more candidate PQC libraries, for each of the plurality of cryptographic applications using the plurality of first compatible PQC libraries, and the plurality of second compatible PQC libraries;

selecting a plurality of optimal PQC schemes for each candidate PQC library of the one or more candidate PQC libraries of each of the plurality of classical cryptographic schemes associated with each of the plurality of cryptographic applications, based on the plurality of performance objective metrics and the plurality of application security requirements;

obtaining a scheme-library pair further comprising a final optimal PQC scheme and a candidate PQC library of the one or more candidate PQC libraries, for each the plurality of classical cryptographic schemes associated with each of the plurality of cryptographic applications;

obtaining a one or more final candidate PQC libraries of the one or more candidate PQC libraries, using the scheme-library pair for each the plurality of classical cryptographic schemes of the plurality of cryptographic applications; and

recommending the obtained one or more final candidate PQC libraries of the one or more candidate PQC libraries for the plurality of cryptographic applications of the enterprise.

SYSTEM

100

MEMORY

102

DATABASE

108

HARDWARE

PROCESSOR(S)

104

I/O INTERFACE(S)

106

**FIG. 1**

Cryptographic Applications, Classical Cryptographic Schemes, Frequencies, Post Quantum Cryptography (PQC) Libraries

Applications Requirement Attributes

Library Feature Attributes

Requirement Feature Mapping

Input Data

Compatible PQC Libraries

Preference Based PQC Libraries

First and Second Compatible PQC Libraries

Candidate PQC Libraries

Optimal PQC Schemes

Scheme-Library Pair

Final Candidate PQC Libraries

**FIG. 2**

300

Receiving a plurality of cryptographic applications pertaining to an enterprise, a plurality of classical cryptographic schemes, a plurality of frequencies of a plurality of cryptographic operations associated with each classical cryptographic scheme of the plurality of classical cryptographic schemes, a plurality of Post Quantum Cryptography (PQC) libraries, a plurality of library feature attributes associated with the plurality of PQC libraries, and a plurality of application requirement attributes, a plurality of mappings between the plurality of library feature attributes and the plurality of application requirement attributes, and a plurality of application requirement attribute types associated with the plurality of cryptographic applications, a plurality of performance objective metrics associated with the plurality of cryptographic applications, and a plurality of application security requirements associated with the plurality of cryptographic applications **302**

Classifying the plurality of application requirement attributes of each of the cryptographic application of the plurality of cryptographic application into one of (a) a stringent requirement attribute and, (b) a non-stringent requirement attribute, to obtain a plurality of stringent requirement attributes, and a plurality of non-stringent requirement attributes, based on the plurality of application requirement attribute types **304**

A

**FIG. 3A**

300 ⟍

Ⓐ

Obtaining (i) a plurality of compatible PQC libraries, and a plurality of non-compatible PQC libraries for each of the plurality of cryptographic applications based on the generated plurality of stringent requirement attributes, (ii) a plurality of first preference based PQC libraries, and a plurality of second preference based PQC libraries for each of the plurality of cryptographic applications based on the plurality of non-stringent requirement attributes and the plurality of library feature attributes, and (iii) a plurality of first compatible PQC libraries, and a plurality of second compatible PQC libraries of the plurality of cryptographic applications based on the plurality of non-stringent requirement attributes **306**

Obtaining one or more candidate PQC libraries, for each of the plurality of cryptographic applications using the plurality of first compatible PQC libraries, and the plurality of second compatible PQC libraries **308**

Selecting a plurality of optimal PQC schemes for each candidate library of the one or more candidate libraries of each of the plurality of classical cryptographic schemes associated with each of the plurality of cryptographic applications, based on the plurality of performance objective metrics and the plurality of application security requirements **310**

Ⓑ

**FIG. 3B**

(B)

300

Obtaining a scheme-library pair comprising a final optimal PQC scheme and a candidate PQC library of the plurality of candidate PQC libraries, for each the plurality of classical cryptographic schemes associated with each of the plurality of cryptographic applications **312**

Obtaining a one or more final candidate PQC libraries of the one or more candidate PQC libraries, using the scheme-library pair for each the plurality of classical cryptographic schemes of the plurality of cryptographic applications **314**

Recommending the obtained one or more final candidate PQC libraries of the one or more candidate PQC libraries for the plurality of cryptographic applications of the enterprise **316**

**FIG. 3C**

Application security requirement = 3

Classical Cryptographic Schemes

RSA $\left(CS_{key}\right)$  ECDSA $\left(CS_{sig}\right)$  DES $\left(CS_{SYM}\right)$

Security Filtered PQC Schemes                                    $L_l$

| KEM Schemes | SIG Schemes | SYM Schemes |
|---|---|---|
| Frodo $\quad$ 3 | Dilithium $\quad$ 3 | AES $\quad$ 3 |
| NTRU $\quad$ 3 | Falcon $\quad$ 3 | AES-CBC $\quad$ 3 |
| Kyber $\quad$ 3 | SPHNICS+ $\quad$ 3 | AES-CTR $\quad$ 3 |
| PQC Scheme Selection $LBM()$ | PQC Scheme Selection $LBM()$ | PQC Scheme Selection $LBM()$ |

Kyber $\quad$ 3      Dilithium $\quad$ 3      AES $\quad$ 3

Optimal PQC Schemes

**FIG. 4**

FIG. 5

**FIG. 6**

Europäisches Patentamt

European Patent Office

Office européen des brevets

# EUROPEAN SEARCH REPORT

**Application Number**

EP 25 20 3785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ROY SHUBHRO ET AL: "Post Quantum Cryptographic Schemes and Libraries Selection", 18 August 2025 (2025-08-18), DATABASE AND EXPERT SYSTEMS APPLICATIONS; [LECTURE NOTES IN COMPUTER SCIENCE; LECT.NOTES COMPUTER], SPRINGER NATURE SWITZERLAND, CHAM, PAGE(S) 338 - 343, XP047737167, ISSN: 0302-9743 ISBN: 978-3-032-02087-1 [retrieved on 2025-08-18] * the whole document * ----- | 1-15 | INV. H04L9/08 H04L9/16 |
| X | US 11 343 270 B1 (CARTER JR ROBERT L [US] ET AL) 24 May 2022 (2022-05-24) * columns 2, 10-15, 62, 83,84 * ----- | 1-15 | |
| A | OJETUNDE BABATUNDE ET AL: "A Selection Technique for Effective Utilization of Post-Quantum Cryptography in 5G Application and Beyond", 2023 15TH INTERNATIONAL CONFERENCE ON COMPUTER AND AUTOMATION ENGINEERING (ICCAE), IEEE, 3 March 2023 (2023-03-03), pages 551-558, XP034337397, DOI: 10.1109/ICCAE56788.2023.10111350 [retrieved on 2023-05-03] * the whole document * ----- -/-- | 1-15 | TECHNICAL FIELDS SEARCHED (IPC) H04L |

The present search report has been drawn up for all claims

| Place of search | Date of completion of the search | Examiner |
|---|---|---|
| Munich | 8 March 2026 | Yamajako-Anzala, A |

EPO FORM 1503 03.82 (P04C01)

Europäisches
Patentamt

European
Patent Office

Office européen
des brevets

# EUROPEAN SEARCH REPORT

**Application Number**

EP 25 20 3785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAN WOHLWENDER ET AL: "crypto_lib: Comparing and selecting cryptography libraries (long version of EICC 2022 publication)", ARXIV.ORG, CORNELL UNIVERSITY LIBRARY, 201 OLIN LIBRARY CORNELL UNIVERSITY ITHACA, NY 14853, 30 March 2022 (2022-03-30), XP091186918, * the whole document * | 1-15 | |
| A | THAKUR MEENA SINGH DILIP ET AL: "Enterprise Post Quantum Cryptography Migration Tools", 2024 16TH INTERNATIONAL CONFERENCE ON COMMUNICATION SYSTEMS & NETWORKS (COMSNETS), IEEE, 3 January 2024 (2024-01-03), pages 327-329, XP034547969, DOI: 10.1109/COMSNETS59351.2024.10427442 [retrieved on 2024-02-16] * the whole document * | 1-15 | |
| A | OUNI ALI ET AL: "Search-based software library recommendation using multi-objective optimization", INFORMATION AND SOFTWARE TECHNOLOGY, ELSEVIER, AMSTERDAM, NL, vol. 83, 29 November 2016 (2016-11-29), pages 55-75, XP029851529, ISSN: 0950-5849, DOI: 10.1016/J.INFSOF.2016.11.007 * the whole document * | 1-15 | **TECHNICAL FIELDS SEARCHED (IPC)** |

The present search report has been drawn up for all claims

| Place of search | Date of completion of the search | Examiner |
|---|---|---|
| Munich | 8 March 2026 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 20 3785

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2026

| Patent document cited in search report | Publication date | Patent family member(s) | Publication date |
|---|---|---|---|
| US 11343270 B1 | 24-05-2022 | NONE | |

EPO FORM P0459

For more details about this annex : see Official Journal of the European Patent Office, No. 12/82

**REFERENCES CITED IN THE DESCRIPTION**

**Patent documents cited in the description**

- IN 202521005202